(19) **Europäisches Patentamt / European Patent Office / Office européen des brevets**

(11) **EP 4 064 130 A1**

(12) # EUROPEAN PATENT APPLICATION
published in accordance with Art. 153(4) EPC

(43) Date of publication:
**28.09.2022  Bulletin 2022/39**

(21) Application number: **20902769.7**

(22) Date of filing: **11.09.2020**

(51) International Patent Classification (IPC):
**G06N 3/02** (2006.01)

(52) Cooperative Patent Classification (CPC):
**G06F 17/18; G06N 3/02; G06N 3/04; G06N 3/08**

(86) International application number:
**PCT/CN2020/114832**

(87) International publication number:
**WO 2021/120719 (24.06.2021 Gazette 2021/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.12.2019  CN 201911314332**

(71) Applicant: **Huawei Technologies Co., Ltd.**
**Longgang**
**Shenzhen, Guangdong 518129 (CN)**

(72) Inventors:
• **ZHANG, Xinyu**
  **Shenzhen, Guangdong 518129 (CN)**
• **YUAN, Peng**
  **Shenzhen, Guangdong 518129 (CN)**
• **FANG, Muyuan**
  **Shenzhen, Guangdong 518129 (CN)**
• **ZHONG, Zhao**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **NEURAL NETWORK MODEL UPDATE METHOD, AND IMAGE PROCESSING METHOD AND DEVICE**

(57)    This application discloses a neural network model update method, an image processing method, and an apparatus in the field of artificial intelligence. The neural network model update method includes: obtaining a structure of a neural network model and a related parameter of the neural network model; training the neural network model based on the related parameter of the neural network model to obtain a trained neural network model; and if an evaluation result of the trained neural network model does not meet a preset condition, updating at least two of the related parameter of the neural network model and the structure of the neural network model until an evaluation result of an updated neural network model meets a preset condition and/or a quantity of update times reaches a preset quantity of times. According to the method in this application, efficiency of updating a neural network model can be improved, and a structure of a neural network model with better performance and/or a related parameter of the neural network model can be obtained.

900

Obtain a structure of a neural network model and a related parameter of the neural network model — 910

Input training data into the neural network model for processing to obtain a prediction label — 920

Determine a function value of a loss function based on the prediction label and a label of the training data, and train the neural network model based on the function value of the loss function and a hyper-parameter of the neural network model to obtain a trained neural network model — 930

Evaluate the trained neural network model in an evaluation manner, and if an evaluation result of the trained neural network model does not meet a preset condition, update at least two items of the related parameter of the neural network model and the structure of the neural network model until an evaluation result of an updated neural network model meets the preset condition and/or a quantity of updates reaches a preset quantity of times — 940

FIG. 9

**Description**

This application claims priority to Chinese Patent Application No. 201911314332.6, filed with the China National Intellectual Property Administration on December 19, 2019 and entitled "NEURAL NETWORK MODEL UPDATE METHOD, IMAGE PROCESSING METHOD, AND APPARATUS", which is incorporated herein by reference in its entirety.

**TECHNICAL FIELD**

This application relates to the field of artificial intelligence, and in particular, to a neural network model update method, an image processing method, and an apparatus.

**BACKGROUND**

Artificial intelligence (artificial intelligence, AI) is a theory, a method, a technology, and an application system that simulate, extend, and expand human intelligence by using a digital computer or a machine controlled by a digital computer, sense the environment, obtain knowledge, and use the knowledge to obtain a best result. In other words, artificial intelligence is a branch of computer science, and is intended to understand the essence of intelligence and produce a new intelligent machine that can react in a manner similar to human intelligence. Artificial intelligence is to study design principles and implementation methods of various intelligent machines, so that the machines have perceiving, inference, and decision-making functions. Researches in an artificial intelligence field include a robot, natural language processing, computer vision, decision-making and inference, human-computer interaction, recommendation and search, an AI basic theory, and the like.

With rapid development of artificial intelligence technologies, performance of a neural network (for example, a convolutional neural network) is continuously improved, and the neural network has made great achievements in processing and analyzing a plurality of media signals such as an image, a video, and a voice. A neural network with good performance usually has a fine network structure. However, in actual application, due to different training sets, indicator requirements, and application objectives, an existing network structure cannot be directly used.

For a full service process, in a conventional solution, raw data is usually sent to a preprocessing module for processing, processed data is sent to a neural network for feature learning, and then a loss function is used for updating the neural network. Currently, a common practice in the conventional solution is to separately design an automated machine learning (automated machine learning, AutoML) task for each module in the service process, and automatically search for each module based on AutoML, to obtain an optimal module of each module, for example, a preprocessing manner, a network model structure, and a loss function. However, after the modules obtained in the foregoing solutions are combined, optimal performance may not be obtained. Even when there is a conflict between some modules, system performance may be degraded.

Therefore, how to efficiently update the neural network model becomes a technical problem that urgently needs to be resolved.

**SUMMARY**

This application provides a neural network model update method, an image processing method, and an apparatus, to improve efficiency of updating a neural network model.

According to a first aspect, a neural network model update method is provided. The method includes: obtaining a structure of a neural network model and a related parameter of the neural network model; inputting training data into the neural network model for processing to obtain a prediction label; determining a function value of a loss function based on the prediction label and a label of the training data, and training the neural network model based on the function value of the loss function and a hyper-parameter of the neural network model to obtain a trained neural network model; and evaluating the trained neural network model in an evaluation manner, and if an evaluation result of the trained neural network model does not meet a preset condition, updating at least two of the related parameter of the neural network model and the structure of the neural network model until an evaluation result of an updated neural network model meets the preset condition and/or a quantity of update times reaches a preset quantity of times. The related parameter of the neural network model includes the hyper-parameter, the loss function, and the evaluation manner of the neural network model.

Specifically, the updating at least two of the related parameter of the neural network model and the structure of the neural network model includes updating the structure of the neural network model and/or updating the related parameter of the neural network model.

For example, the updating at least two of the related parameter of the neural network model and the structure of the neural network model may be updating the structure and the loss function of the neural network model.

For another example, the updating at least two of the related parameter of the neural network model and the structure of the neural network model may be updating the hyper-parameter and the loss function of the neural network model. In other words, in the update process, the structure and the evaluation manner of the neural network model may remain unchanged. In this case, an optimal combination manner of the loss function and the hyper-parameter of the neural network model can be obtained. The combination manner may be applied to another neural network model, to improve efficiency of updating the neural network model.

For example, the evaluation manner is related to an evaluation indicator. The evaluation indicator may include at least one of a target size of the neural network model, target inference accuracy of the neural network model, a target inference delay of the neural network model, and the like. The target size of the neural network model may be understood as a target memory space occupied by the neural network model.

For example, the evaluation manner may include evaluating a size of the neural network model and inference accuracy of the neural network model. For another example, the evaluation manner may include evaluating the inference accuracy of the neural network model.

It should be understood that the evaluation manner may be set based on a user requirement. Specific content of the evaluation indicator is not limited in this embodiment of this application.

In this embodiment of this application, any two of the related parameter of the neural network model and the structure of the neural network model are updated, and the related parameter of the updated neural network model and the structure of the neural network model are evaluated, to implement joint evaluation of a plurality of parameters. This avoids a possible conflict that exists when each parameter is separately updated. Therefore, a finally obtained combination of the related parameter of the neural network model and the structure of the neural network model can reach a required performance indicator as soon as possible. This improves efficiency of updating the neural network model.

With reference to the first aspect, in some implementations of the first aspect, the related parameter of the neural network model further includes a preprocessing manner. The inputting training data into the neural network model for processing to obtain a prediction label includes: preprocessing the training data in the preprocessing manner; and inputting preprocessed training data into the neural network model for processing to obtain the prediction label.

With reference to the first aspect, in some implementations of the first aspect, the related parameter of the neural network model further includes a compression manner of the neural network model. The inputting training data into the neural network model for processing to obtain a prediction label includes: processing the neural network model in the compression manner of the neural network model to obtain a processed neural network model; and inputting the training data into the processed neural network model to obtain the prediction label.

Specifically, the processing the neural network model in the compression manner of the neural network model includes compressing the neural network model and/or quantizing the neural network model.

With reference to the first aspect, in some implementations of the first aspect, the updating at least two of the related parameter of the neural network model and the structure of the neural network model includes: determining, based on first information corresponding to each item of the at least two of the related parameter of the neural network model and the structure of the neural network model, a probability distribution of a plurality of candidate options corresponding to each item, where the first information corresponding to each item includes the evaluation result; and determining one candidate option in the plurality of candidate options corresponding to each item as an updated option of each item based on the probability distribution of the plurality of candidate options corresponding to each item.

For example, the updating the structure and the loss function of the neural network model includes: determining a probability distribution of a plurality of candidate structures of the neural network model based on first information corresponding to the structure of the neural network model, and determining one of the plurality of candidate structures of the neural network model as an updated structure of the neural network model based on the probability distribution of the plurality of structures of the neural network model; determining a probability distribution of a plurality of candidate loss functions based on first information corresponding to the loss function; and determining a probability distribution of a plurality of candidate loss functions based on first information corresponding to the loss function, and determining one of the plurality of candidate loss functions as an updated loss function based on the probability distribution of the plurality of candidate loss functions. The first information corresponding to the structure of the neural network model includes the evaluation result of the updated neural network model. The first information corresponding to the loss function includes the evaluation result of the updated neural network model.

In this embodiment of this application, one of the plurality of candidate options corresponding to each item is determined as the updated option of each item based on the probability distribution of the plurality of candidate options corresponding to each item. In this way, efficiency of an update process can be improved, and local optimization of the update process can be avoided.

With reference to the first aspect, in some implementations of the first aspect, the first information corresponding to each item further includes related information of another item in the at least two of the related parameter of the neural network model and the structure of the neural network model. The related information of the remaining item includes the remaining item and/or a probability distribution of a plurality of candidate options corresponding to the remaining item.

In this embodiment of this application, the related information of the remaining item is obtained in the update process, to implement joint update and optimization. A possible conflict between parameters can be avoided in the update process, so that a finally obtained combination of the related parameter of the neural network model and the structure of the neural network model can reach a required performance indicator as soon as possible. This improves efficiency of updating the neural network model.

With reference to the first aspect, in some implementations of the first aspect, the method further includes: obtaining the related information of the remaining item based on a first frequency, where the first frequency is related to a scale of a service processed by the trained neural network model.

With reference to the first aspect, in some implementations of the first aspect, the first information corresponding to each item further includes historical related information of each item. The historical related information of each item includes the updated option of each item in the previous update and/or a probability distribution of the plurality of candidate options corresponding to each item in the previous update.

With reference to the first aspect, in some implementations of the first aspect, the first information corresponding to each item further includes training resource status information. The training resource status information includes a quantity of training machines.

The training resource status information may further include a quantity of currently available training machines.

With reference to the first aspect, in some implementations of the first aspect, the hyper-parameter of the neural network model includes a parameter that remains unchanged in a training process of the neural network model.

With reference to the first aspect, in some implementations of the first aspect, the hyper-parameter of the neural network model includes one or more of the following: a learning rate of the neural network model, a weight decay coefficient of the neural network model, a label smooth coefficient of the neural network model, or a dropout parameter of the neural network model.

According to a second aspect, an image processing method is provided. The method includes: obtaining a to-be-processed image; and processing the to-be-processed image by using a target neural network model to obtain a processing result of the to-be-processed image. The target neural network model is obtained by updating at least two of a related parameter of a neural network model and a structure of the neural network model until an evaluation result of an updated neural network model meets a preset condition and/or a quantity of update times reaches a preset quantity of times. The related parameter of the neural network model includes a hyper-parameter, a loss function, and an evaluation manner of the neural network model. The neural network model is obtained by determining a function value of the loss function based on a prediction label and a label of training data and performing training based on the function value of the loss function and the hyper-parameter of the neural network model. The prediction label is obtained by inputting the training data into the neural network model for processing.

It should be understood that, before image classification is performed by the target neural network model used in the image processing method in the second aspect, the target neural network model may be further trained based on a training image, and a trained target neural network model may classify the to-be-processed image.

In other words, the target neural network model may be obtained by using the neural network model update method in the first aspect. Then, the target neural network model is trained based on the training image. After the training is completed, the target neural network model may classify the to-be-processed image.

Alternatively, the target neural network model may be obtained by using the neural network model update method in the first aspect. The target neural network model may be a trained neural network model. The trained neural network model may classify the to-be-processed image.

In this application, because the target neural network model is obtained by using the method in the first aspect, the target neural network model meets or approaches an application requirement of the neural network model. For image classification, the neural network model can achieve a good image classification effect (for example, a more accurate classification result). Any two of the neural network model and the related parameter of the neural network model are updated, and the updated neural network model and the related parameter of the neural network model are evaluated, to implement joint evaluation of a plurality of parameters. This avoids a possible conflict that exists when each parameter is separately updated. Therefore, a finally obtained combination of the neural network model and the related parameter of the neural network model can reach a required performance indicator as soon as possible. This improves efficiency of updating the neural network model, and the target neural network model is obtained as soon as possible.

With reference to the second aspect, in some implementations of the second aspect, the related parameter of the neural network model further includes a preprocessing manner. The prediction label is obtained by preprocessing the training data in the preprocessing manner and inputting preprocessed training data into the neural network model for processing.

With reference to the second aspect, in some implementations of the second aspect, the related parameter of the neural network model further includes a compression manner of the neural network model. The prediction label is obtained by processing the neural network model in the compression manner of the neural network model and inputting the training data into a processed neural network model.

With reference to the second aspect, in some implementations of the second aspect, the updating at least two of the related parameter of the neural network model and the structure of the neural network model includes: determining, based on first information corresponding to each item of the at least two of the related parameter of the neural network model and the structure of the neural network model, a probability distribution of a plurality of candidate options corresponding to each item, where the first information corresponding to each item includes the evaluation result; and determining one candidate option in the plurality of candidate options corresponding to each item as an updated option of each item based on the probability distribution of the plurality of candidate options corresponding to each item.

With reference to the second aspect, in some implementations of the second aspect, the first information corresponding to each item further includes related information of another item in the at least two of the related parameter of the neural network model and the structure of the neural network model. The related information of the another item includes the another item and/or a probability distribution of a plurality of candidate options corresponding to the another item.

With reference to the second aspect, in some implementations of the second aspect, the first information corresponding to each item further includes historical related information of each item. The historical related information of each item includes the updated option of each item in the previous update and/or a probability distribution of the plurality of candidate options corresponding to each item in the previous update.

With reference to the second aspect, in some implementations of the second aspect, the first information corresponding to each item further includes training resource status information. The training resource status information includes a quantity of training machines.

With reference to the second aspect, in some implementations of the second aspect, the hyper-parameter of the neural network model includes a parameter that remains unchanged in a training process of the neural network model.

With reference to the second aspect, in some implementations of the second aspect, the hyper-parameter of the neural network model includes one or more of the following: a learning rate of the neural network model, a weight decay coefficient of the neural network model, a label smooth coefficient of the neural network model, or a dropout parameter of the neural network model.

According to a third aspect, a neural network model update apparatus is provided. The apparatus includes a module or unit configured to perform the method in any one of the first aspect and the implementations of the first aspect.

According to a fourth aspect, an image processing apparatus is provided. The apparatus includes a module or unit configured to perform the method in any one of the second aspect and the implementations of the second aspect.

It should be understood that extensions to, limitations on, explanations for, and description of corresponding content in the first aspect are also applicable to same content in the second aspect, the third aspect, and the fourth aspect.

According to a fifth aspect, a neural network model update apparatus is provided. The apparatus includes: a memory, configured to store a program; and a processor, configured to execute the program stored in the memory. When the program stored in the memory is executed, the processor is configured to perform the method in any one of the first aspect and the implementations of the first aspect.

The processor in the fifth aspect may be a central processing unit (central processing unit, CPU), or may be a combination of a CPU and a neural network operation processor. The neural network operation processor herein may include a graphics processing unit (graphics processing unit, GPU), a neural-network processing unit (neural-network processing unit, NPU), a tensor processing unit (tensor processing unit, TPU), and the like. The TPU is an artificial intelligence accelerator-specific integrated circuit customized by Google (Google) for machine learning.

According to a sixth aspect, an image processing apparatus is provided. The apparatus includes: a memory, configured to store a program; and a processor, configured to execute the program stored in the memory. When the program stored in the memory is executed, the processor is configured to perform the method in any one of the second aspect and the implementations of the second aspect.

The processor in the sixth aspect may be a central processing unit, or may be a combination of a CPU and a neural network operation processor. The neural network operation processor herein may include a graphics processing unit, a neural-network processing unit, a tensor processing unit, and the like. The TPU is an artificial intelligence accelerator-specific integrated circuit customized by Google for machine learning.

According to a seventh aspect, a computer-readable medium is provided. The computer-readable medium stores program code to be executed by a device, and the program code is used for performing the method in any one of the implementations of the first aspect or the second aspect.

According to an eighth aspect, a computer program product including instructions is provided. When the computer program product runs on a computer, the computer is enabled to perform the method in any one of the implementations of the first aspect or the second aspect.

According to a ninth aspect, a chip is provided. The chip includes a processor and a data interface. The processor performs the method in any one of the implementations of the first aspect or the second aspect by reading, through the data interface, instructions stored in a memory.

Optionally, in an implementation, the chip may further include the memory, and the memory stores the instructions. The processor is configured to execute the instructions stored in the memory, and when the instructions are executed, the processor is configured to perform the method in any one of the implementations of the first aspect or the second aspect.

The foregoing chip may be specifically a field programmable gate array (field-programmable gate array, FPGA) or an application-specific integrated circuit (application-specific integrated circuit, ASIC).

**BRIEF DESCRIPTION OF DRAWINGS**

FIG. 1 is a schematic diagram of an artificial intelligence main framework according to an embodiment of this application;

FIG. 2 is a schematic diagram of a structure of a system architecture according to an embodiment of this application;

FIG. 3 is a schematic diagram of a structure of a convolutional neural network according to an embodiment of this application;

FIG. 4 is a schematic diagram of a structure of another convolutional neural network according to an embodiment of this application;

FIG. 5 is a schematic diagram of a hardware structure of a chip according to an embodiment of this application;

FIG. 6 is a schematic diagram of a system architecture according to an embodiment of this application;

FIG. 7 is a schematic flowchart of an automatic update of a neural network model;

FIG. 8 is a schematic flowchart of applying automatic machine learning to a neural network model;

FIG. 9 is a schematic flowchart of a neural network model update method according to an embodiment of this application;

FIG. 10 is a schematic block diagram of a neural network model update apparatus according to an embodiment of this application;

FIG. 11 is a schematic block diagram of another neural network model update apparatus according to an embodiment of this application;

FIG. 12 is a schematic flowchart of another neural network model update method according to an embodiment of this application;

FIG. 13 is a schematic flowchart of an image processing method according to an embodiment of this application;

FIG. 14 is a schematic block diagram of a neural network model update apparatus according to an embodiment of this application;

FIG. 15 is a schematic block diagram of an image processing apparatus according to an embodiment of this application; and

FIG. 16 is a schematic block diagram of a neural network model training apparatus according to an embodiment of this application.

**DESCRIPTION OF EMBODIMENTS**

The following describes the technical solutions of this application with reference to the accompanying drawings.

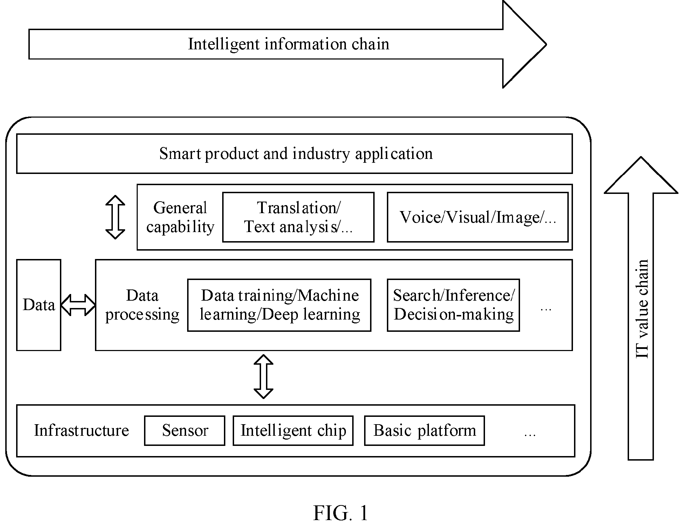

FIG. 1 is a schematic diagram of an artificial intelligence main framework. The main framework describes an overall working procedure of an artificial intelligence system, and is applicable to a requirement of the general artificial intelligence field.

The following describes in detail the foregoing artificial intelligence main framework from two dimensions: an "intelligent information chain" (horizontal axis) and an "information technology (information technology, IT) value chain" (vertical axis).

The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, data undergoes a condensation process of "data-information-knowledge-wisdom".

The "IT value chain" reflects a value brought by artificial intelligence to the information technology industry from an underlying infrastructure and information (technology providing and processing implementation) of human intelligence to an industrial ecological process of a system.

(1) Infrastructure

The infrastructure provides calculation capability support for the artificial intelligence system, communicates with an external world, and implements support by using a basic platform.

The infrastructure can communicate with the outside by using a sensor, and a calculation capability of the infrastructure can be provided by an intelligent chip.

The intelligent chip herein may be a hardware acceleration chip such as a central processing unit (central processing unit, CPU), a neural-network processing unit (neural-network processing unit, NPU), a graphics processing unit (graphics processing unit, GPU), an application-specific integrated circuit (application specific integrated circuit, ASIC), or a field programmable gate array (field programmable gate array, FPGA).

The basic platform of the infrastructure may include related platforms, for example, a distributed computing framework and a network, for assurance and support, including cloud storage and computing, an interconnection network, and the like.

For example, the infrastructure can communicate with the outside by using the sensor, to obtain data. Then, the data is provided to an intelligent chip in a distributed computing system provided by the basic platform, for computing.

(2) Data

Data from a higher layer of the infrastructure indicates a data source in the artificial intelligence field. The data relates to a graph, an image, voice, and text, further relates to internet of things data of a conventional device, and includes service data of an existing system and perception data such as force, displacement, a liquid level, a temperature, and humidity.

(3) Data processing

The foregoing data processing usually includes a processing manner such as data training, machine learning, deep learning, search, inference, or decision-making.

In machine learning and deep learning, intelligent information of the data may be modeled, extracted, preprocessed, trained, or the like in a symbolized and formalized manner.

Inference is a process of simulating intelligent human inference methods in computers or intelligent systems and using, based on an inference control policy, formalized information to carry out machine thinking and resolve problems, and typical functions are search and matching.

Decision-making is a process of deciding after intelligent information inference, and usually provides functions such as classification, ranking, and prediction.

(4) General capability

After data processing mentioned above is performed on data, some general capabilities may be further formed based on a data processing result, for example, an algorithm or a general system, such as translation, text analysis, computer vision processing, speech recognition, and image recognition.

(5) Smart product and industry application

Smart products and industry applications are products and applications of the artificial intelligence system in various fields, and are package of an overall solution of the artificial intelligence. Decision-making for intelligent information is productized and an application is implemented. Application fields mainly include smart manufacturing, smart transportation, smart home, smart health care, smart security, autonomous driving, safe city, intelligent terminal, and the like.

Embodiments of this application may be applied to many fields of artificial intelligence, for example, fields such as smart manufacturing, smart transportation, smart home, smart health care, smart security protection, autonomous driving, and a safe city.

Specifically, embodiments of this application may be applied to fields in which a (deep) neural network needs to be used, for example, autonomous driving, image classification, image retrieval, image semantic segmentation, image quality enhancement, image super-resolution processing, and natural language processing.

The following briefly describes three application scenarios: album image classification, a safe city, and automatic machine learning (auto machine learning, AutoML) cloud service.

Album image classification:
When a user stores a large quantity of images on a terminal device (for example, a mobile phone) or a cloud disk, recognition of images in an album may help the user or a system perform classification management on the album. This improves user experience.

According to a neural network model update method in embodiments of this application, a neural network applicable to album classification can be obtained or optimized. Then, the neural network may classify images, to label images of different classes. This facilitates viewing and searching by the user. In addition, classification labels of the images may also be provided for an album management system to perform classification management. This saves management time of the user, improves album management efficiency, and improves user experience.

Attribute recognition in the safe city scenario:

In the safe city scenario, a plurality of types of attribute recognition need to be performed, for example, pedestrian attribute recognition and riding attribute recognition. The deep neural network plays an important role in the plurality of types of attribute recognition by using a powerful capability of the deep neural network. According to the neural network model update method in embodiments of this application, a neural network applicable to the attribute recognition in the safe city scenario can be obtained or optimized. Then, an input road image may be processed by using the neural network, to recognize different attribute information in the road image.

Automatic machine learning cloud service:

On an automatic machine learning cloud service platform, a user may customize a neural network model and/or obtain a related parameter of the neural network model based on a requirement and a task of the user. According to the neural network model update method provided in embodiments of this application, the neural network model and/or the related parameter of the neural network model can be obtained based on a requirement of the user. This improves performance of the cloud service platform.

Because embodiments of this application relate to massive applications of the neural network, for ease of understanding, the following describes terms and concepts related to the neural network that may be used in embodiments of this application.

(1) Neural network

The neural network may include a neuron. The neuron may be an operation unit that uses $x_s$ and an intercept of 1 as input. Output of the operation unit may be as follows:

$$h_{W,b}\left(x\right) = f\left(W^T x\right) = f(\sum_{s=1}^{n} W_s x_s + b) \qquad (1\text{-}1)$$

Herein, s = 1, 2, ..., n, n is a natural number greater than 1, $W_s$ is a weight of $x_s$, and b is a bias of the neuron. f is an activation function (activation functions) of the neuron, and is used for introducing a non-linear characteristic into the neural network, to convert an input signal in the neuron into an output signal. The output signal of the activation function may be used as an input to a next convolutional layer, and the activation function may be a sigmoid function. The neural network is a network constituted by connecting a plurality of single neurons together. To be specific, an output of a neuron may be an input to another neuron. An input to each neuron may be connected to a local receptive field of a previous layer to extract a feature of the local receptive field. The local receptive field may be a region including several neurons.

(2) Deep neural network

The deep neural network (deep neural network, DNN) is also referred to as a multi-layer neural network, and may be understood as a neural network having a plurality of hidden layers. The DNN is divided based on positions of different layers. Neural networks inside the DNN may be classified into three types: an input layer, a hidden layer, and an output layer. Generally, a first layer is the input layer, a last layer is the output layer, and a middle layer is the hidden layer. Layers are fully connected. To be specific, any neuron in an ith layer is necessarily connected to any neuron in an (i+1)th layer.

Although the DNN seems complex, an operation at each layer is actually not complex and is generally represented by the following linear relational expression: $\vec{y} = \alpha(W\vec{x} + \vec{b})$. Herein, $\vec{x}$ is an input vector, $\vec{y}$ is an output vector, $\vec{b}$ is an offset vector, $W$ is a weight matrix (also referred to as a coefficient), and $\alpha()$ is an activation function. At each layer, the output vector $\vec{y}$ is obtained by performing the simple operation on the input vector $\vec{x}$. Because there are a large quantity of DNN layers, there are also a large quantity of coefficients $W$ and offset vectors $\vec{b}$. These parameters are defined in the DNN as follows: The coefficient $W$ is used as an example. It is assumed that in a three-layer DNN, a linear coefficient from a fourth neuron at a second layer to a second neuron at a third layer is defined as $W_{24}^{3}$. A superscript 3 represents a number of a layer at which the coefficient W is located, and a subscript corresponds to an index 2 of the third layer for output and an index 4 of the second layer for input.

In conclusion, a coefficient from a kth neuron at an (L-1)th layer to a jth neuron at an Lth layer is defined as $W_{jk}^{L}$.

It should be noted that the input layer has no parameter $W$. In the deep neural network, more hidden layers allow the network to better describe a complex case in the real world. Theoretically, a model with more parameters has higher complexity and a larger "capacity". It indicates that the model can complete a more complex learning task. Training of the deep neural network is a process of learning a weight matrix, and a final objective of the training is to obtain a weight matrix of all layers of a trained deep neural network (a weight matrix formed by vectors $W$ of many layers).

(3) Convolutional neural network

The convolutional neural network (convolutional neuron network, CNN) is a deep neural network with a convolutional structure. The convolutional neural network includes a feature extractor including a convolutional layer and a sub-sampling layer. The feature extractor may be considered as a filter. The convolutional layer is a neuron layer that is in the convolutional neural network and that performs convolution processing on an input signal. In the convolutional layer of the convolutional neural network, one neuron may be connected to only a part of neurons at a neighboring layer. A convolutional layer generally includes several feature planes, and each feature plane may include some neurons arranged in a rectangle. Neurons of a same feature plane share a weight, and the shared weight herein is a convolution kernel. Sharing a weight may be understood as that a manner of extracting image information is unrelated to a position. The convolution kernel may be initialized in a form of a matrix of a random size. In a training process of the convolutional neural network, an appropriate weight may be obtained for the convolution kernel through learning. In addition, sharing the weight is advantageous because connections between layers of the convolutional neural network are reduced, and a risk of overfitting is reduced.

(4) A recurrent neural network (recurrent neural networks, RNN) processes sequence data. In a conventional neural network model, from an input layer to a hidden layer and then to an output layer, the layers are fully connected, but nodes at each layer are not connected. This common neural network resolves many problems, but is still incompetent to resolve many other problems. For example, to predict a next word in a sentence, a previous word usually needs to be used, because adjacent words in the sentence are not independent. A reason why the RNN is referred to as a recurrent neural network is that a current output of a sequence is related to a previous output. A specific representation form is that the network memorizes previous information and applies the previous information to calculation of the current output. To be specific, nodes at the hidden layer are no longer unconnected, but are connected, and an input for the hidden layer includes an output of the input layer and also an output of the hidden layer at a previous moment. Theoretically, the RNN can process sequence data of any length. Training of the RNN is the same as training of a conventional CNN or DNN.

A reason why the recurrent neural network is required when there is the convolutional neural network is simple. In the convolutional neural network, there is a premise that elements are independent of each other, and input and output are also independent, such as a cat and a dog. However, many elements are interconnected in the real world. For example, stocks change over time. For another example, a person says: I like traveling, a most favorite place is Yunnan, and I will go there in the future if there is a chance. If there is a blank to be filled herein, people should know that "Yunnan" is to be filled in. This is because people can make an inference from a context, but how can a machine do this? The RNN emerges. The RNN is designed to enable a machine to have a capability to remember like human beings. Therefore, an output of the RNN depends on current input information and historical memory information.

(5) Loss function

In a process of training a deep neural network, because it is expected that an output of the deep neural network maximally approximates a value that actually needs to be predicted, a current predicted value of the network and an actually expected target value may be compared, and then a weight vector of each layer of the neural network is updated based on a difference between the current predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the actually expected target value or a value that more approximates the actually expected target value. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network becomes a process of reducing the loss as much as possible.

(6) Back propagation algorithm

In a training process, a neural network may correct a value of a parameter of a neural network model by using an error back propagation (back propagation, BP) algorithm, so that a reconstruction error loss of the neural network model becomes increasingly smaller. Specifically, an input signal is forward transferred until the error loss is generated in an output, and the parameter of the neural network model is updated through back propagation of information about the error loss, to converge the error loss. The back propagation algorithm is a back propagation motion mainly dependent on the error loss, and is used for obtaining a parameter of an optimal neural network model, for example, a weight matrix.

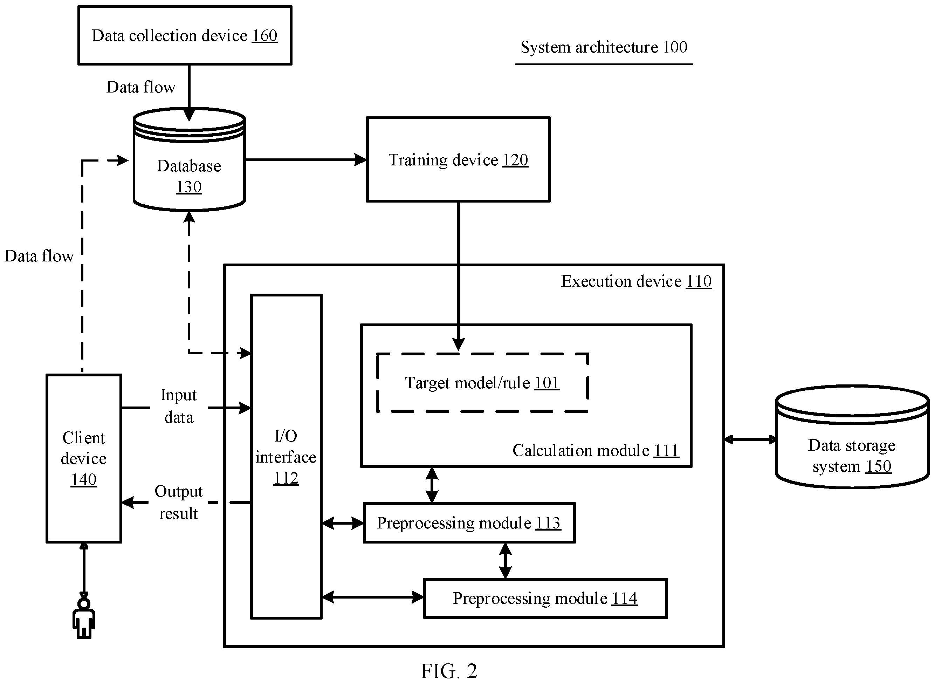

FIG. 2 shows a system architecture 100 according to an embodiment of this application. In FIG. 2, a data collection device 160 is configured to collect training data. For an image processing method in embodiments of this application, the training data may include a training image and a classification result corresponding to the training image. The result corresponding to the training image may be a result of manual pre-labeling.

After collecting the training data, the data collection device 160 stores the training data in a database 130. A training device 120 obtains a target model/rule 101 through training based on the training data maintained in the database 130.

The following describes the target model/rule 101 obtained by the training device 120 based on the training data. The training device 120 processes an input raw image, and compares an output image with the raw image until a difference between the image output by the training device 120 and the raw image is less than a specific threshold. In this way, training of the target model/rule 101 is completed.

The target model/rule 101 can be used for implementing the image processing method in embodiments of this application. The target model/rule 101 in this embodiment of this application may specifically be a neural network. It should be noted that, during actual applications, the training data maintained in the database 130 may not all be collected by the data collection device 160, or may be received and obtained from another device. It should be further noted that the training device 120 may not necessarily train the target model/rule 101 completely based on the training data maintained in the database 130, or may obtain training data from a cloud or another place to perform model training. The foregoing description should not be construed as a limitation on embodiments of this application.

The target model/rule 101 obtained through training by the training device 120 may be applied to different systems or devices, for example, an execution device 110 shown in FIG. 2. The execution device 110 may be a terminal, for example, a mobile phone terminal, a tablet, a laptop computer, an augmented reality (augmented reality, AR) AR/virtual reality (virtual reality, VR) terminal, or a vehicle-mounted terminal, or may be a server, a cloud, or the like. In FIG. 2, the execution device 110 is provided with an input/output (input/output, I/O) interface 112 configured to exchange data with an external device. A user may input data to the I/O interface 112 by using a client device 140. The input data in this embodiment of this application may include a to-be-processed image input by the client device.

A preprocessing module 113 and a preprocessing module 114 are configured to perform preprocessing based on the input data (for example, the to-be-processed image) received by the I/O interface 112. In this embodiment of this application, the preprocessing module 113 and the preprocessing module 114 may not exist (or only one of the preprocessing module 113 and the preprocessing module 114 exists). A computing module 111 is directly configured to process the input data.

In a related process in which the execution device 110 preprocesses the input data or the calculation module 111 of the execution device 110 performs calculation, the execution device 110 may invoke data, code, and the like in a data storage system 150 for corresponding processing, and may also store data, instructions, and the like obtained through corresponding processing into the data storage system 150.

Finally, the I/O interface 112 returns a processing result such as the foregoing obtained classification result of the image to the client device 140, to provide the processing result for the user.

It should be noted that the training device 120 may generate corresponding target models/rules 101 for different targets or different tasks based on different training data. The corresponding target models/rules 101 may be used for implementing the foregoing targets or complete the foregoing tasks, to provide a desired result for the user.

In a case shown in FIG. 2, the user may manually give input data, and the manual giving may be performed in an interface provided by the I/O interface 112. In another case, the client device 140 may automatically send the input data to the I/O interface 112. If the client device 140 is required to obtain authorization from the user to automatically send the input data, the user may set corresponding permission on the client device 140. The user may view, on the client device 140, a result output by the execution device 110. Specifically, the result may be presented in a form of display, a sound, an action, or the like. The client device 140 may also serve as a data collector to collect, as new sample data, the input data that is input to the I/O interface 112 and an output result that is output from the I/O interface 112 shown in the figure, and store the new sample data in the database 130. Certainly, the client device 140 may alternatively not perform collection. Instead, the I/O interface 112 directly stores, in the database 130 as new sample data, the input data that is input to the I/O interface 112 and the output result that is output from the I/O interface 112 in the figure.

It should be noted that FIG. 2 is merely a schematic diagram of a system architecture according to an embodiment of this application. A location relationship between the devices, the components, the modules, and the like shown in the figure does not constitute any limitation. For example, in FIG. 2, the data storage system 150 is an external storage relative to the execution device 110, but in another case, the data storage system 150 may alternatively be disposed in the execution device 110.

As shown in FIG. 2, the target model/rule 101 is obtained through training by the training device 120. In this embodiment of this application, the target model/rule 101 may be a neural network in this application. Specifically, the neural network constructed in this embodiment of this application may be a CNN, a deep convolutional neural network (deep convolutional neural networks, DCNN), a recurrent neural network (recurrent neural network, RNN), or the like.

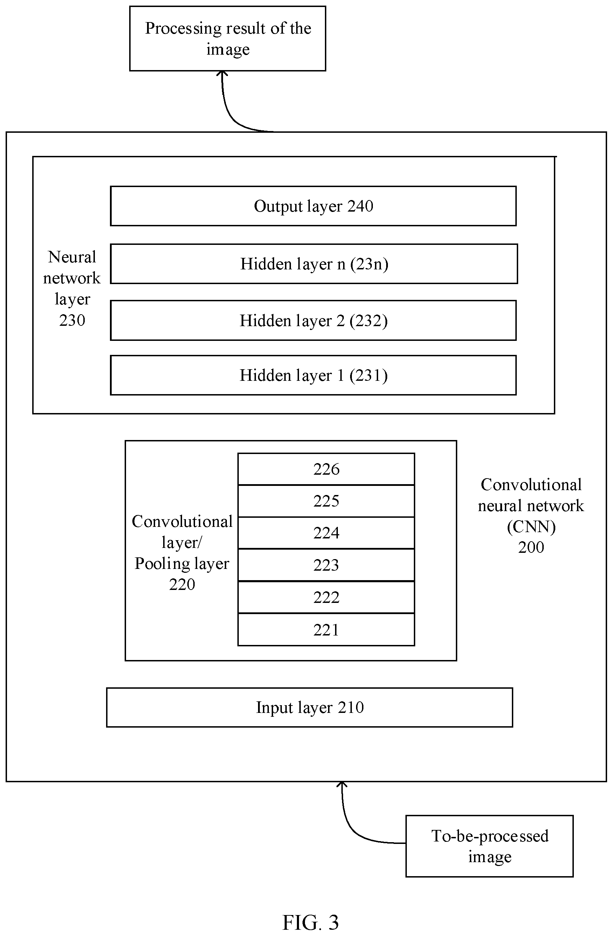

Because the CNN is a very common neural network, a structure of the CNN is described below in detail with reference to FIG. 3. As described in the foregoing description of basic concepts, the convolutional neural network is a deep neural network with a convolutional structure, and is a deep learning (deep learning) architecture. The deep learning architecture is to perform multi-level learning at different abstract levels by using a neural network model update algorithm. As a deep learning architecture, the CNN is a feed-forward (feed-forward) artificial neural network. Each neuron in the feed-forward artificial neural network can respond to an image input into the feed-forward artificial neural network.

A structure of a neural network specifically used in the image processing method in embodiments of this application may be shown in FIG. 3. In FIG. 3, a convolutional neural network (CNN) 200 may include an input layer 210, a convolutional layer/pooling layer 220 (the pooling layer is optional), and a neural network layer 230. The input layer 210 may obtain a to-be-processed image, and send the obtained to-be-processed image to the convolutional layer/pooling layer 220 and the subsequent neural network layer 230 for processing, to obtain a processing result of the image. The following describes in detail an architecture of the layer in the CNN 200 in FIG. 3.

Convolutional layer/Pooling layer 220:

Convolutional layer:

As shown in FIG. 3, the convolutional layer/pooling layer 220 may include, for example, layers 221 to 226. For example, in an implementation, the layer 221 is a convolutional layer, the layer 222 is a pooling layer, the layer 223 is a convolutional layer, the layer 224 is a pooling layer, the layer 225 is a convolutional layer, and the layer 226 is a pooling layer. In another implementation, the layers 221 and 222 are convolutional layers, the 223 layer is a pooling layer, the layers 224 and 225 are convolutional layers, and the layer 226 is a pooling layer. To be specific, output of a convolutional layer may be used as input for a subsequent pooling layer, or may be used as input for another convolutional layer, to continue to perform a convolution operation.

The following uses the convolutional layer 221 as an example to describe an internal working principle of the convolutional layer.

The convolutional layer 221 may include a plurality of convolution operators. The convolution operator is also referred to as a kernel. In image processing, the convolution operator functions as a filter that extracts specific information from an input image matrix. The convolution operator may essentially be a weight matrix, and the weight matrix is usually predefined. In a process of performing a convolution operation on an image, the weight matrix usually processes pixels at a granularity level of one pixel (or two pixels, depending on a value of a stride (stride)) in a horizontal direction on an input image, to extract a specific feature from the image. A size of the weight matrix should be related to a size of the image. It should be noted that a depth dimension (depth dimension) of the weight matrix is the same as a depth dimension of the input image. During a convolution operation, the weight matrix extends to an entire depth of the input image. Therefore, a convolutional output of a single depth dimension is generated through convolution with a single weight matrix. However, in most cases, a single weight matrix is not used, but a plurality of weight matrices with a same size (rows x columns), namely, a plurality of same-type matrices, are applied. Outputs of the weight matrices are superimposed to form a depth dimension of a convolutional image. The dimension herein may be understood as being determined based on the foregoing "plurality". Different weight matrices may be used for extracting different features from the image. For example, one weight matrix is used for extracting edge information of the image, another weight matrix is used for extracting a specific color of the image, and a further weight matrix is used for blurring unneeded noise in the image. The plurality of weight matrices have the same size (rows x columns), and convolutional feature maps extracted from the plurality of weight matrices with the same size have a same size. Then, the plurality of extracted convolutional feature maps with the same size are combined to form output of the convolution operation.

Weight values in these weight matrices need to be obtained through a lot of training during actual applications. Each weight matrix formed by using the weight values obtained through training may be used for extracting information from an input image, to enable the convolutional neural network 200 to perform correct prediction.

When the convolutional neural network 200 has a plurality of convolutional layers, a convolutional layer (for example, the layer 221) usually extracts more general features. The general features may also be referred to as low-level features. As a depth of the convolutional neural network 200 increases, a deeper convolutional layer (for example, the layer 226) extracts more complex features, such as high-level semantic features. Higher-level semantic features are more applicable to a problem to be resolved.

Pooling layer:

Because a quantity of training parameters usually needs to be reduced, a pooling layer usually needs to be periodically introduced after a convolutional layer. To be specific, for the layers 221 to 226 at the layer 220 shown in FIG. 3, one convolutional layer may be followed by one pooling layer, or a plurality of convolutional layers may be followed by one or more pooling layers. During image processing, the pooling layer is only used for reducing a space size of the image.

The pooling layer may include an average pooling operator and/or a maximum pooling operator, to perform sampling on the input image to obtain an image with a small size. The average pooling operator may calculate pixel values in the image in a specific range, to generate an average value. The average value is used as an average pooling result. The maximum pooling operator may select a pixel with a maximum value in a specific range as a maximum pooling result. In addition, similar to that the size of the weight matrix at the convolutional layer needs to be related to the size of the image, an operator at the pooling layer also needs to be related to the size of the image. A size of a processed image output from the pooling layer may be less than a size of an image input to the pooling layer. Each pixel in the image output from the pooling layer represents an average value or a maximum value of a corresponding sub-region of the image input to the pooling layer.

Neural network layer 230:

After processing is performed by the convolutional layer/pooling layer 220, the convolutional neural network 200 still cannot output required output information. As described above, at the convolutional layer/pooling layer 220, only a feature is extracted, and parameters resulting from an input image are reduced. However, to generate final output information (required class information or other related information), the convolutional neural network 200 needs to use the neural network layer 230 to generate output of one required class or outputs of a group of required classes. Therefore, the neural network layer 230 may include a plurality of hidden layers (231, 232, ..., and 23n shown in FIG. 3) and an output layer 240. Parameters included in the plurality of hidden layers may be obtained through pretraining based on related training data of a specific task type. For example, the task type may include image recognition, image classification, super-resolution image reconstruction, and the like.

At the neural network layer 230, the plurality of hidden layers are followed by the output layer 240, namely, the last layer of the entire convolutional neural network 200. The output layer 240 has a loss function similar to a categorical cross entropy, and the loss function is specifically configured to calculate a prediction error. Once forward propagation (for example, propagation in a direction from 210 to 240 in FIG. 3) of the entire convolutional neural network 200 is completed, back propagation (for example, propagation in a direction from 240 to 210 in FIG. 3) is started to update a weight value and a deviation of each layer mentioned above, to reduce a loss of the convolutional neural network 200 and an error between a result output by the convolutional neural network 200 by using the output layer and an ideal result.

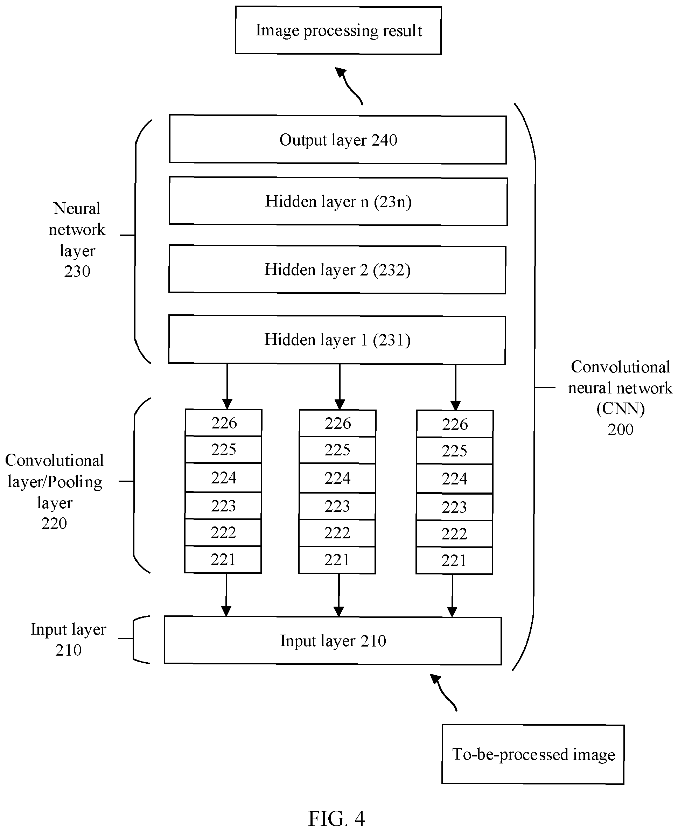

A structure of a neural network specifically used in the image processing method in embodiments of this application may be shown in FIG. 4. In FIG. 4, a convolutional neural network (CNN) 200 may include an input layer 210, a convolutional layer/pooling layer 220 (the pooling layer is optional), and a neural network layer 230. Compared with FIG. 3, in FIG. 4, at the convolutional layer/pooling layer 220, a plurality of convolutional layers/pooling layers are in parallel, and extracted features are input to the neural network layer 230 for processing.

It should be noted that the convolutional neural network shown in FIG. 3 and the convolutional neural network shown in FIG. 4 are merely two example convolutional neural networks used in the image processing method in embodiments of this application. In a specific application, the convolutional neural network used in the image processing method in embodiments of this application may alternatively exist in a form of another network model.

In addition, a structure of a convolutional neural network obtained by using a neural network structure search method in embodiments of this application may be shown as the structure of the convolutional neural network in FIG. 3 and the structure of the convolutional neural network FIG. 4.

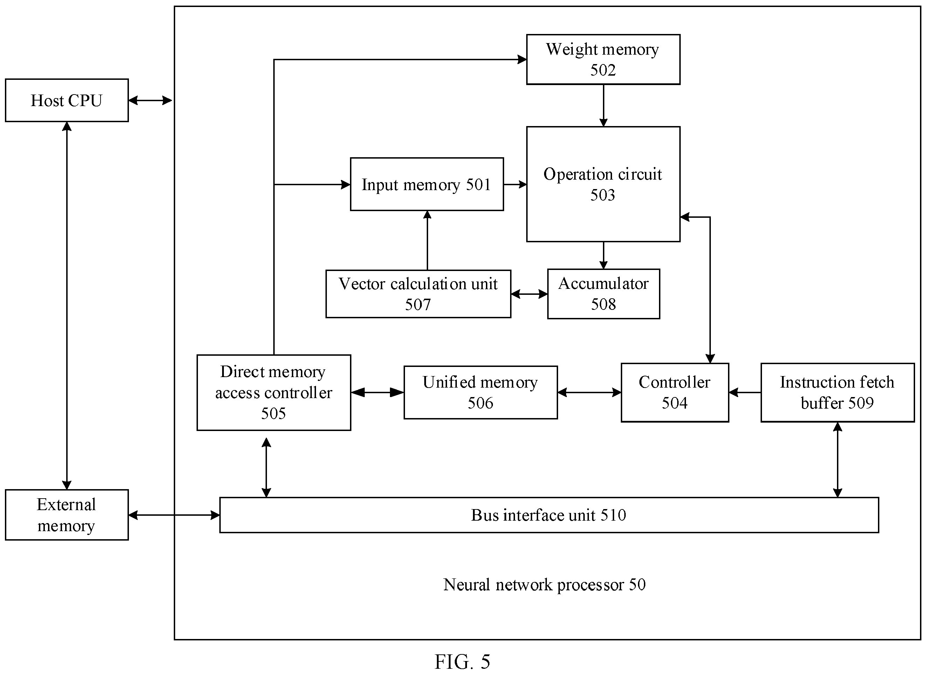

FIG. 5 is a schematic diagram of a hardware architecture of a chip according to an embodiment of this application. The chip includes a neural-network processing unit 50. The chip may be disposed in the execution device 110 shown in FIG. 1, to complete calculation work of the calculation module 111. The chip may alternatively be disposed in the training device 120 shown in FIG. 1, to complete training work of the training device 120 and output the target model/rule 101. Algorithms at all layers of the convolutional neural network shown in FIG. 3 and the convolutional neural network shown in FIG. 4 may be implemented in the chip shown in FIG. 5.

The neural-network processing unit NPU 50 serves as a coprocessor, and may be disposed on a host central processing unit (central processing unit, CPU) (host CPU). The host CPU assigns a task. A core part of the NPU is an operation circuit 503, and a controller 504 controls the operation circuit 503 to extract data from a memory (a weight memory or an input memory) and perform an operation.

In some implementations, the operation circuit 503 internally includes a plurality of processing engines (process engine, PE). In some implementations, the operation circuit 503 is a two-dimensional systolic array. Alternatively, the operation circuit 503 may be a one-dimensional systolic array or another electronic circuit that can perform mathematical operations such as multiplication and addition. In some implementations, the operation circuit 503 is a general-purpose matrix processor.

For example, it is assumed that there are an input matrix A, a weight matrix B, and an output matrix C. The operation circuit extracts corresponding data of the matrix B from the weight memory 502, and buffers the corresponding data into each PE in the operation circuit. The operation circuit extracts data of the matrix A from the input memory 501, performs a matrix operation between the data of the matrix A and the matrix B to obtain a partial matrix result or a final matrix result, and stores the result into an accumulator (accumulator) 508.

A vector calculation unit 507 may perform further processing on the output of the operation circuit, for example, vector multiplication, vector addition, an exponential operation, a logarithmic operation, and value comparison. For example, the vector calculation unit 507 may be configured to perform network calculation, such as pooling (pooling), batch normalization (batch normalization), or local response normalization (local response normalization) at a non-convolutional/non-FC layer in a neural network.

In some implementations, the vector calculation unit 507 can store a processed output vector in a unified memory 506. For example, the vector calculation unit 507 may apply a non-linear function to the output of the operation circuit 503, for example, a vector of an accumulated value, to generate an activation value. In some implementations, the vector calculation unit 507 generates a normalized value, a combined value, or both. In some implementations, the processed output vector can be used as an activation input to the operation circuit 503, for example, used at a subsequent layer in the neural network.

A unified memory 506 is configured to store input data and output data.

For weight data, a direct memory access controller (direct memory access controller, DMAC) 505 transfers input data of an external memory to the input memory 501 and/or the unified memory 506, stores weight data of the external memory into the weight memory 502, and stores data of the unified memory 506 into the external memory.

A bus interface unit (bus interface unit, BIU) 510 is configured to implement interaction between the host CPU, the DMAC, and an instruction fetch buffer 509 through a bus.

The instruction fetch buffer (instruction fetch buffer) 509 connected to the controller 504 is configured to store instructions used by the controller 504.

The controller 504 is configured to invoke the instructions buffered in the instruction fetch buffer 509, to control a working process of the operation accelerator.

Usually, the unified memory 506, the input memory 501, the weight memory 502, and the instruction fetch buffer 509 each are an on-chip (On-Chip) memory. The external memory is a memory outside the NPU. The external memory may be a double data rate synchronous dynamic random access memory (double data rate synchronous dynamic random access memory, DDR SDRAM for short), a high bandwidth memory (high bandwidth memory, HBM), or another readable and writable memory.

An operation of each layer in the convolutional neural network shown in FIG. 3 and the convolutional neural network FIG. 4 may be performed by the operation circuit 503 or the vector calculation unit 507.

The execution device 110 in FIG. 2 described above can perform steps of the image processing method in embodiments of this application. The CNN model shown in FIG. 3 and the CNN model shown in FIG. 4 and the chip shown in FIG. 5 may also be configured to perform the steps of the image processing method in embodiments of this application.

The following describes in detail a neural network construction method in embodiments of this application and the image processing method in embodiments of this application with reference to the accompanying drawings.

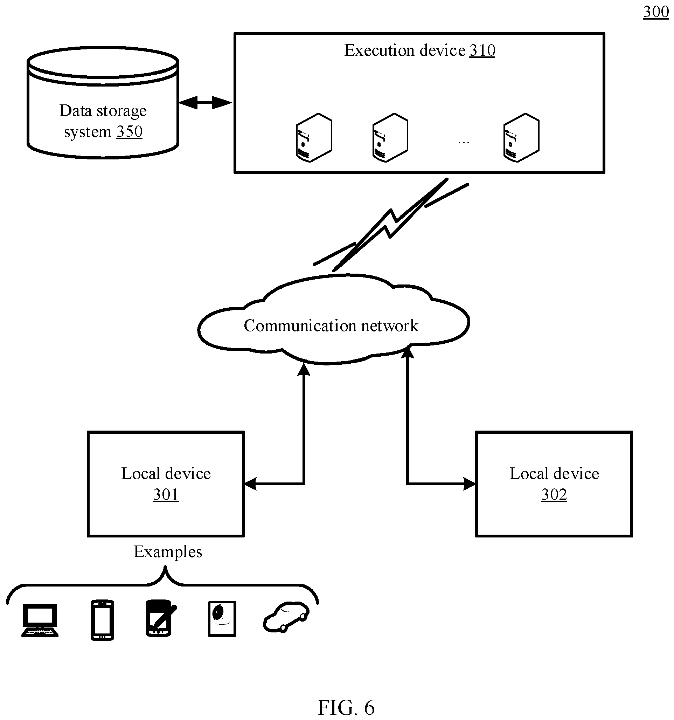

FIG. 6 shows a system architecture 300 according to an embodiment of this application. The system architecture includes a local device 301, a local device 302, an execution device 310, and a data storage system 350. The local device 301 and the local device 302 are connected to the execution device 310 through a communication network.

The execution device 310 may be implemented by one or more servers. Optionally, the execution device 310 may cooperate with another computing device, for example, a device such as a data memory, a router, or a load balancer. The execution device 310 may be disposed on one physical site, or distributed on a plurality of physical sites. The execution device 310 may implement the neural network model update method in embodiments of this application by using data in the data storage system 350 or by invoking program code in the data storage system 350.

Specifically, in an implementation, the execution device 110 may perform the following process:

obtaining a neural network model and a related parameter of the neural network model, where the related parameter of the neural network model includes a hyper-parameter, a loss function, and an evaluation manner of the neural network model;

inputting training data into the neural network model to obtain a prediction label;

determining a function value of the loss function based on the prediction label and a label of the training data, and training the neural network model based on the function value of the loss function and the hyper-parameter of the neural network model to obtain a trained neural network model; and

evaluating the trained neural network model in the evaluation manner, and if an evaluation result of the trained neural network model does not meet a preset condition, updating at least two of the neural network model and the related parameter of the neural network model until an updated result meets a termination condition.

In the foregoing process, the execution device 110 can obtain a target neural network and/or a related parameter of the neural network. The target neural network may be used for image classification, image processing, or the like.

A user may operate user equipment (for example, the local device 301 and the local device 302) of the user to interact with the execution device 310. Each local device may be any computing device, such as a personal computer, a computer workstation, a smartphone, a tablet computer, an intelligent camera, a smart automobile, another type of cellular phone, a media consumption device, a wearable device, a set-top box, or a game console.

The local device of each user may interact with the execution device 310 through a communication network of any communication mechanism/communication standard. The communication network may be a wide area network, a local area network, a point-to-point connection, or any combination thereof.

In an implementation, the local device 301 and the local device 302 obtain a related parameter of the target neural network from the execution device 310, deploy the target neural network on the local device 301 and the local device 302, and perform image classification, image processing, or the like by using the target neural network.

In another implementation, the target neural network may be directly deployed on the execution device 310. The execution device 310 obtains a to-be-processed image from the local device 301 and the local device 302, and performs classification or another type of image processing on the to-be-processed image by using a target neural network model.

Alternatively, the execution device 310 may be a cloud device. In this case, the execution device 310 may be deployed on a cloud. Alternatively, the execution device 310 may be a terminal device. In this case, the execution device 310 may be deployed on a user terminal side. This is not limited in this embodiment of this application.

An AutoML-based cloud platform can perform network design and search based on restrictions set by the user, and provide, for the user, a network model obtained through the network design and search. The restrictions may include a type of the network model, accuracy of the network model, a delay of the network model, a running platform of the network model, and the like.

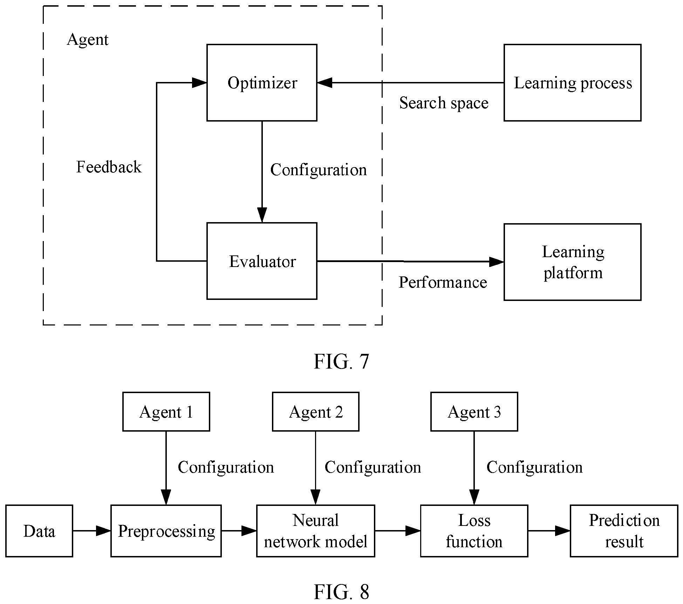

FIG. 7 is a schematic diagram of a structure of an AutoML framework. As shown in FIG. 7, AutoML includes a search space (search space), an optimizer (optimizer), and an evaluator (evaluator).

The search space is determined based on a specific AutoML task. The specific AutoML task is a learning process in FIG. 7, and may be understood as a task/process that needs to be learned. The specific task may include a preprocessing manner, a neural network model, a loss function, and the like. For example, when a specific task is a neural network model, the search space may include a plurality of neural network structure units, and a final neural network model is formed by combining these neural network units in the search space.

The optimizer is configured to select different configurations in the search space and allocate the configurations to the evaluator for evaluation, and then perform policy update or configuration update based on an evaluation result fed back by the evaluator. For example, when the specific task is the neural network model, the optimizer may select or search for neural network structure units in the search space, combine the neural network structure units into one or more candidate models, and select a network model from the candidate models obtained through the combination. The selected network model may be understood as a configuration, and the configuration is allocated to the evaluator for evaluation.

The evaluator is configured to evaluate performance indicators of the different configurations on a learning platform, and feed back an obtained evaluation result to the optimizer. For example, when the specific task is the neural network model, the evaluator may train the network model selected by the optimizer, and evaluate a performance indicator of a trained network model. The performance indicator may include accuracy of the neural network model, a delay of the network model, and the like. The evaluation result is fed back to the optimizer for the optimizer to update the configurations.

In this embodiment of this application, the optimizer and the evaluator in the AutoML framework may be used as an agent (agent) or an intelligent module. The agent interacts with the environment for learning, to complete the specific AutoML task. The agent is an entity that interacts with the environment through actions. The environment is an object with which the agent interacts or a target explored by the agent, and corresponds to the foregoing learning platform. The actions are all operations performed by the agent on the environment and correspond to the configurations selected by the optimizer. That the optimizer selects the different configurations in the search space is equivalent to that the agent selects the different actions (action) in the search space. A status is environment information obtained by the agent. The environment information may include a reward. The reward is an effect of the actions fed back by the environment to the agent, and corresponds to the evaluation result of the different configurations obtained by the evaluator. That the optimizer updates the configurations based on the evaluation result is equivalent to that the agent can adjust a generation direction of the actions based on the reward.

In a service process, data is preprocessed in the preprocessing manner, preprocessed data is input into the neural network model for feature learning and mapping, and then a parameter of the neural network model is iteratively updated by using the loss function, or the neural network model is trained. The trained neural network model is a neural network model provided for the user, and the user may predict a result by using the trained neural network model.

FIG. 8 is a schematic diagram of applying AutoML to a service process. Generally, AutoML tasks can only be designed separately for each module/parameter that needs to be optimized in the service process. For example, the parameters/modules that need to be optimized in the foregoing service process may include a preprocessing manner, a neural network model, and a loss function that correspond to three independent AutoML tasks. The three AutoML tasks are respectively completed by three agents. The three agents respectively obtain three optimal configurations, namely, an optimal preprocessing mode, an optimal neural network model, and an optimal loss function.

The three optimal configurations are applied to the foregoing service process. To be specific, data is preprocessed in the optimal preprocessing manner, preprocessed data is input into the optimal neural network model for feature learning and mapping, and then a parameter of the optimal neural network model is iteratively updated by using the optimal loss function, or the optimal neural network model is trained. Whether a trained optimal neural network model can meet restrictions of a user is determined. If the restrictions of the user are met, the neural network model is a neural network model provided for the user. The user can predict a result by using the neural network model. If the restrictions of the user are not met, the three agents need to be reused for obtaining three optimal configurations, and the foregoing process is repeated until the restrictions of the user are met.

The three AutoML tasks are independent of each other, and the three agents are not associated with each other. Therefore, the end-to-end design cannot be implemented. If the optimal preprocessing manner, the optimal neural network model, and the optimal loss function obtained by the three agents are simply combined, the trained neural network model may not obtain optimal performance. Even when some configurations in the three optimal configurations conflict with each other to some extent, performance of the finally obtained neural network model may be degraded, for example, accuracy of the finally obtained neural network model is reduced. When the performance of the finally obtained neural network model does not meet the restrictions of the user, the previous process needs to be repeated. This affects production efficiency.

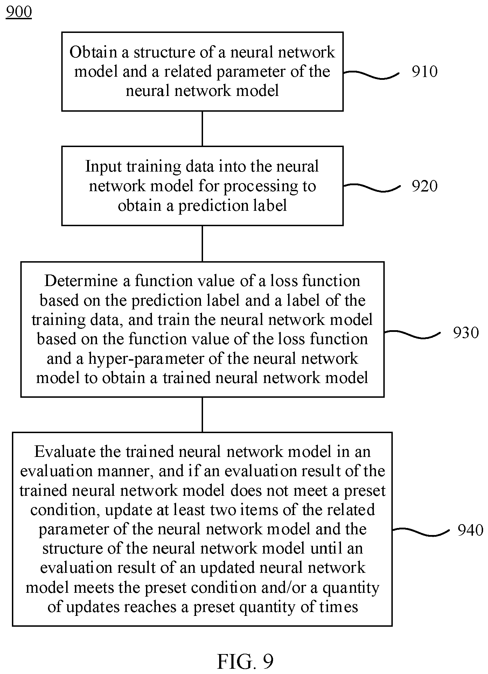

The following describes in detail a neural network model update method 900 according to an embodiment of this application with reference to FIG. 9. The method shown in FIG. 9 may be performed by a neural network model update apparatus. The neural network model update apparatus may be a cloud service device, or may be a mobile terminal, for example, an apparatus that has a sufficient computing capability to update a neural network model, such as a computer or a server. The method includes step 910 to step 940. The following describes step 910 to step 940 in detail.

910: Obtain a structure of a neural network model and a related parameter of the neural network model, where the related parameter of the neural network model includes a hyper-parameter, a loss function, and an evaluation manner of the neural network model.

A parameter of the neural network model is obtained through data training or data learning. For example, the parameter of the neural network model may be a weight and a bias of the neural network model. The hyper-parameter of the neural network model includes a parameter that remains unchanged in a training process of the neural network model. The hyper-parameter is not obtained through data training or data learning, and is usually determined before the data training or the data learning.

For example, the hyper-parameter of the neural network model includes one or more of the following: a learning rate of the neural network model, a weight decay (weight decay) coefficient of the neural network model, a label smooth (label smooth) coefficient of the neural network model, a dropout (dropout) parameter of the neural network model, or the like.

The evaluation manner of the neural network model is related to a specific evaluation indicator of the neural network model. For example, the evaluation indicator of the neural network model may include at least one of a target size of the neural network model, target inference accuracy of the neural network model, a target inference delay of the neural network model, and the like. The target size of the neural network model may be understood as a target memory space occupied by the neural network model. In this embodiment of this application, "inference" may also be referred to as "prediction". Correspondingly, an evaluation result of a trained neural network model may include at least one of a size of the trained neural network model, inference accuracy of the trained neural network model, an inference delay of the trained neural network model, and the like.

For example, the evaluation manner may include evaluating a size of the neural network model and inference accuracy of the neural network model. For another example, the evaluation manner may include evaluating inference accuracy of the neural network model.

It should be understood that the evaluation indicator and the evaluation manner may be set based on a user requirement. Specific content of the evaluation indicator and the evaluation manner is not limited in this embodiment of this application.

Any one of the related parameter of the neural network model and the structure of the neural network model may be preset, or may be randomly obtained.

920: Input training data into the neural network model for processing to obtain a prediction label.

Optionally, the related parameter of the neural network model further includes a preprocessing manner of preprocessing the training data. In this case, step 920 includes:

921a: Preprocess the training data in the preprocessing manner.

For example, the neural network model may be applied to image processing. The training data includes a training image. The preprocessing manner may include flipping or translating the training image.

922A: Input preprocessed training data into the neural network model for processing to obtain the prediction label.

Optionally, the related parameter of the neural network model further includes a compression manner of the neural network model. In this case, step 920 includes:

921b: Process the neural network model in the compression manner of the neural network model to obtain a processed neural network model.

Specifically, the processing the neural network model in the compression manner of the neural network model includes compressing the neural network model and/or quantizing the neural network model.

For example, the compressing the neural network model may include: discarding a redundancy weight parameter, reducing a quantity of convolution core channels, reducing a quantity of layers of the neural network model, or the like.

For example, the quantizing the neural network model may include: compressing the neural network model by reducing a quantity of bits required for representing each weight. For example, the weight is changed from 32 bits to 8 bits.

It should be understood that the foregoing manner of processing the neural network model in the compression manner of the neural network model is merely an example. Specific content of the compression manner of the neural network model is not limited in this embodiment of this application.

922b: Input the training data into the processed neural network model to obtain the prediction label.

In step 921b, the processing the neural network model may be processing the neural network model that has not been trained, or may be processing the trained neural network model.

Specifically, step 921b may include: directly processing, for example, compressing and/or quantizing, the neural network model obtained in step 910; and then inputting the training data into the processed neural network model to obtain the prediction label. In other words, the neural network model is first processed, and then the processed neural network model is trained. For example, step 930 is performed.

Alternatively, step 921b may include: training, based on the related parameter of the neural network model, the neural network model obtained in step 910, then processing, for example, compressing and/or quantizing, the trained neural network model, and then inputting the training data into the processed neural network model to obtain the prediction label. In other words, the neural network model is first trained. For example, step 930 is performed. Then, the trained neural network model is processed, and the processed neural network model is trained again. For example, step 930 is performed again. The training data used in the two times of training may be the same or may be different.

930: Determine a function value of the loss function based on the prediction label and a label of the training data, and train the neural network model based on the function value of the loss function and the hyper-parameter of the neural network model to obtain the trained neural network model.

The function value of the loss function can be used for measuring a difference between the prediction label of the neural network model and the label of the training data. A weight vector of each layer of neural network is updated based on the difference until the prediction label of the neural network model is very close to the label of the training data. For example, a higher function value of the loss function indicates a larger difference. Therefore, training of the neural network becomes a process of reducing the function value as much as possible. In some cases, the loss function may alternatively be an objective function.

The neural network model is trained by correcting a value of the parameter of the neural network model. Specifically, the neural network model is trained by correcting a parameter value of the structure of the neural network model. In a training process, the value of the parameter of the neural network model may be corrected by using an error back propagation algorithm, so that an error loss of the neural network model becomes increasingly smaller. Specifically, an input signal is forward transferred until the error loss is generated in an output, and the parameter of the neural network model is updated through back propagation of information about the error loss, to converge the error loss. The back propagation algorithm is a back propagation motion mainly dependent on the error loss, and is used for obtaining a parameter of an optimal neural network model, for example, a weight matrix.

940: Evaluate the trained neural network model in the evaluation manner, and if an evaluation result of the trained neural network model does not meet a preset condition, update at least two of the related parameter of the neural network model and the structure of the neural network model until an evaluation result of an updated neural network model meets the preset condition and/or a quantity of update times reaches a preset quantity of times.

In other words, after the at least two of the related parameter of the neural network model and the structure of the neural network model are updated, step 920 to step 940 are repeated to evaluate the neural network model. If the evaluation result of the updated neural network model does not meet the preset condition and/or the quantity of update times does not reach the preset quantity of times, the at least two of the related parameter of the neural network model and the structure of the neural network model continue to be updated until the evaluation result of the updated neural network model meets the preset condition and/or the quantity of update times reaches the preset quantity of times.

The preset condition is related to the evaluation indicator. That the evaluation result meets the preset condition may include that performance of the trained neural network model reaches the evaluation indicator, or may include that performance of the trained neural network model is within a range related to the evaluation indicator.

For example, if the evaluation indicator includes the target inference accuracy of the neural network model and/or the target inference delay of the neural network model, that the evaluation result of the trained neural network model meets the preset condition may be that the inference accuracy of the trained neural network model and/or the inference delay of the trained neural network model reach/reaches the target inference accuracy of the neural network model and/or the target inference delay of the neural network model.

Specifically, the updating at least two of the related parameter of the neural network model and the structure of the neural network model includes updating the structure of the neural network model and/or updating the related parameter of the neural network model.

For example, the updating at least two of the related parameter of the neural network model and the structure of the neural network model may be updating the structure and the loss function of the neural network model. In other words, in the update process, the hyper-parameter and the evaluation manner of the neural network model remain unchanged, and the structure and the loss function of the neural network model are updated to obtain a structure of a first neural network model and a first loss function. Step 920 is performed. Specifically, the training data is input into the first neural network model to obtain the prediction label. Step 930 is performed. Specifically, a function value of the first loss function is determined based on the prediction label and the label of the training data, and the first neural network model is trained based on the function value of the first loss function and the hyper-parameter of the neural network model to obtain the trained neural network model.

Step 940 is performed. Specifically, the trained neural network model is evaluated in the evaluation manner. If the evaluation result of the updated neural network model does not meet the preset condition and/or the quantity of update times does not reach the preset quantity of times, the structure of the first neural network model and the first loss function are updated. Step 920 to step 940 are repeated in the foregoing manner until the evaluation result of the updated neural network model meets the preset condition and/or the quantity of update times reaches the preset quantity of times. In this case, an updated structure and an updated loss function of the neural network model can be obtained.

For example, the updating at least two of the related parameter of the neural network model and the structure of the neural network model may alternatively be updating the loss function and the evaluation manner. In other words, in the update process, the structure of the neural network model, the hyper-parameter of the neural network model, and the like remain unchanged. In this case, an optimal combination manner of the loss function and the evaluation manner can be obtained. The combination manner may be applied to a structure of another neural network model, to improve efficiency of updating the neural network model and improve performance of the neural network model.

Optionally, the updating at least two of the related parameter of the neural network model and the structure of the neural network model in step 940 specifically includes the following steps.

940a: Determine, based on first information corresponding to each item of the at least two of the related parameter of the neural network model and the structure of the neural network model, a probability distribution of a plurality of candidate options corresponding to each item of the at least two, where the first information corresponding to each item includes the evaluation result of the trained neural network model, or may be the evaluation result of the neural network model obtained after the the previous update.

The evaluation result of the neural network model obtained after the the previous update is an evaluation result obtained by training the neural network model based on the structure of the neural network model obtained after the the previous update and/or the related parameter of the neural network model obtained after the the previous update and evaluating the trained neural network model. For ease of description, in this embodiment of this application, the evaluation result obtained by training the neural network model based on the structure of the neural network model obtained after the the previous update and/or the related parameter of the neural network model obtained after the the previous update and evaluating the trained neural network model may also be referred to as evaluation of the updated neural network model. It should be understood that, in this embodiment of this application, only the related parameter of the neural network model is updated, and the structure of the neural network model is not updated. An evaluation result obtained by training the neural network model based on the related parameter of the updated neural network model and evaluating the trained neural network model may also be referred to as an evaluation result obtained by evaluating the updated neural network model.

Specifically, for each item, the first information corresponding to each item may be processed to obtain a feature map. For example, the first information corresponding to each item is processed by using a recurrent neural network to obtain the feature map. The probability distribution of the plurality of candidate options corresponding to each item is determined based on the feature map. For example, the probability distribution of the plurality of candidate options corresponding to each item is determined by using a fully-connected network.

It should be understood that the foregoing manner of determining the probability distribution of the plurality of candidate options corresponding to each item is merely an example, and other manners of determining the probability distribution of the plurality of candidate options corresponding to each item are all applicable to step 940a. A manner of calculating the probability distribution is not limited in this embodiment of this application.

940b: Determine one candidate option in the plurality of candidate options corresponding to each item as an updated option based on the probability distribution of the plurality of candidate options corresponding to each item.

For example, one candidate option with a highest probability in the plurality of candidate options may be determined as the updated option based on the probability distribution of the plurality of candidate options corresponding to each item.

For another example, sampling may be performed based on the probability distribution of the plurality of candidate options corresponding to each item, and a candidate option obtained through sampling is the updated option. This can improve efficiency of the update process and avoid local optimization in the update process.

For example, the updating at least two of the related parameter of the neural network model and the structure of the neural network model in step 940 may be updating two items of the related parameter of the neural network model and the structure of the neural network model. The two items are respectively the structure and the loss function of the neural network model. Step 940 specifically includes:

940c: Determine, based on first information corresponding to the structure of the neural network model, a probability distribution of a plurality of candidate options corresponding to the structure of the neural network model, where the probability distribution of the plurality of candidate options corresponding to the structure of the neural network model may also be understood as a probability distribution of a plurality of candidate structures of the neural network model, and the first information corresponding to the structure of the neural network model includes the evaluation result of the neural network model obtained after the the previous update; and determine, based on first information corresponding to the loss function, a probability distribution of a plurality of candidate options corresponding to the loss function, where the probability distribution of the plurality of candidate options corresponding to the loss function may also be understood as a probability distribution of a plurality of candidate loss functions, and the first information corresponding to the loss function includes the evaluation result of the neural network model obtained after the the previous update.

940d: Determine one candidate option in the plurality of candidate options corresponding to the structure of the neural network model as the structure of the updated neural network model based on the probability distribution of the plurality of candidate options corresponding to the structure of the neural network model; and determine one candidate option in the plurality of candidate options corresponding to the loss function as the updated loss function based on the probability distribution of the plurality of candidate options corresponding to the loss function.

Optionally, the first information corresponding to each item further includes related information of another item in the at least two of the related parameter of the neural network model and the structure of the neural network model. The related information of the another item includes at least one of the another item obtained before a current update and a probability distribution of a plurality of candidate options corresponding to the another item obtained before the current update.

For example, the updating at least two of the related parameter of the neural network model and the structure of the neural network model in step 940 may be updating two items of the related parameter of the neural network model and the structure of the neural network model. The two items are respectively the structure and the loss function of the neural network model.

The first information corresponding to the structure of the neural network model further includes related information of the loss function. The related information of the loss function includes a loss function obtained before the current update and/or a probability distribution of a plurality of candidate options corresponding to the loss function obtained before the current update. For example, the related information of the loss function includes a loss function obtained after the the previous update and/or a probability distribution of a plurality of candidate options corresponding to the loss function obtained after the the previous update. For another example, the related information of the loss function includes a loss function obtained after the previous several updates and/or a probability distribution of a plurality of candidate options corresponding to the loss function obtained after the the previous several updates.

The first information corresponding to the loss function further includes related information of the structure of the neural network model. The related information of the structure of the neural network model includes a structure of the neural network model obtained before the current update and/or a probability distribution of a plurality of candidate options corresponding to the loss function of the neural network model obtained before the current update. For example, the related information of the structure of the neural network model includes the structure of the neural network model obtained after the the previous update and/or a probability distribution of a plurality of candidate options corresponding to the structure of the neural network model obtained after the the previous update. For another example, the related information of the structure of the neural network model includes a structure of the neural network model obtained after the the previous several updates and/or a probability distribution of a plurality of candidate options corresponding to the structure of the neural network model obtained after the the previous several updates.

Optionally, step 940 further includes: separately obtaining the related information of the another item in the at least two based on a first frequency.

In other words, information exchange may be performed based on the first frequency in the update process of the at least two.

For example, the updating at least two of the related parameter of the neural network model and the structure of the neural network model in step 940 may be updating two items of the related parameter of the neural network model and the structure of the neural network model. The two items are respectively the structure and the loss function of the neural network model.

The separately obtaining the related information of the another item in the at least two of the related parameter of the neural network model and the structure of the neural network model based on a first frequency may include: obtaining the related information of the loss function based on the first frequency; and obtaining the related information of the structure of the neural network model based on the first frequency. In other words, information exchange is performed based on the first frequency in the update process of the structure and the loss function of the neural network model.

For example, the first frequency may be a preset fixed value.

Alternatively, the first frequency may be related to a type of a service processed by the neural network model and a scale of the service.

When the scale of the service is small, for example, when the neural network model is used for mobile phone album classification, an order of magnitude of training data is approximately a million level. The information exchange may be instant information exchange. That is, obtaining of related information of another current item is obtaining of related information of another item obtained after the the previous update. When the scale of the service is large, for example, when the neural network model is used for facial recognition, an order of magnitude of training data may reach hundreds of millions. The information exchange may be obtaining of related information of another item within a period of time.

Optionally, content of the related information of the another item in the at least two may be related to the type of the service processed by the neural network model and the scale of the service.

For example, when the scale of the service is small, the content of the related information of the another item may include only the another item. When the scale of the service is large, the content of the related information of the another item may include the another item and a probability distribution of a plurality of candidate options corresponding to the another item.

In this embodiment of this application, the related information of the another item is obtained in the update process, to implement joint update and optimization. A possible conflict between parameters can be avoided in the update process, so that a finally obtained combination of the neural network model and the related parameter of the neural network model can reach a required performance indicator as soon as possible. This improves efficiency of updating the neural network model.

Optionally, the first information corresponding to each item further includes historical related information of each item. The historical related information of each item includes an updated option of each item in the previous update and/or a probability distribution of a plurality of candidate options corresponding to each item in the previous update.

For example, the historical related information of each item may include an updated option of each item in the previous several updates and/or a probability distribution of a plurality of candidate options corresponding to each item in the previous several updates. In this embodiment of this application, for ease of description, the updated option of each item may also be referred to as each updated item.

Further, the historical related information of each item may further include environment status information obtained after the the previous several updates.

Optionally, the first information corresponding to each item further includes training resource status information. The training resource status information includes a quantity of training machines.

For example, the training resource status information may further include a quantity of currently available training machines.

A training resource corresponding to each parameter in the update process, a training scale, or the like may be adjusted based on the training resource status information, to further improve efficiency of updating the neural network model.

For example, a quantity of features in a machine learning process may be adjusted based on the training resource. For another example, the training resource may be allocated based on a quantity of candidate options.

In this embodiment of this application, any two of the related parameter of the neural network model and the structure of the neural network model are updated, and the related parameter of the updated neural network model and the structure of the neural network model are evaluated, to implement joint evaluation of a plurality of parameters. This avoids a possible conflict that exists when each parameter is separately updated. Therefore, a finally obtained combination of the neural network model and the related parameter of the neural network model can reach a required performance indicator as soon as possible. This improves efficiency of updating the neural network model.

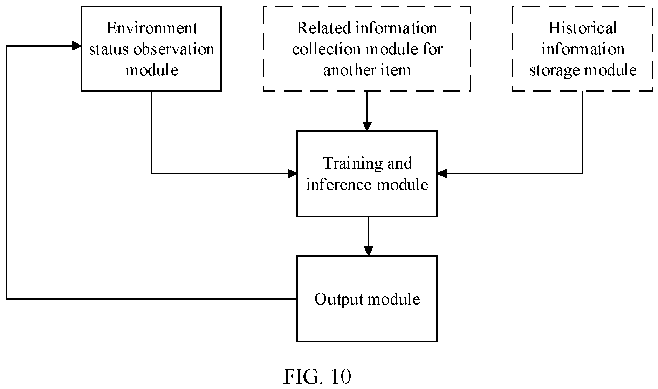

FIG. 10 is a schematic diagram of a neural network model update apparatus according to an embodiment of this application. The neural network model update apparatus mainly includes an environment status observation module, a training and inference module, and an output module.

To better understand an execution process of updating a neural network model in this embodiment of this application, the following briefly describes functions of the modules in FIG. 10.

The environment observation module is configured to collect environment status information, and input the environment status information into the training and inference module. The environment status information includes an evaluation result of a trained neural network model.

Optionally, the environment status information may further include training resource status information. For example, the training resource status information may include a total quantity of training machines and a quantity of currently available training machines.

The neural network model update apparatus may include one environment observation module, or may include a plurality of environment observation modules. For example, each of at least two items to be updated corresponds to one environment observation module.

The training and inference module is configured to update each of the at least two items based on the received information to obtain each updated item.

The neural network model update apparatus may include one training and inference module, or may include a plurality of training and inference modules. For example, each of the at least two items to be updated corresponds to one training and inference module.

The output module is configured to evaluate the neural network model based on each updated item obtained by the training and inference module.

The neural network model update apparatus may further include a historical information storage module and an another-item related information collection module.

The historical information storage module is configured to store historical related information of each item, and input the historical related information into the training and inference module. The historical related information includes at least one of environment status information obtained after the the previous several updates, each item obtained after the the previous several updates, and a network status corresponding to each item obtained after the the previous several updates. For example, the network status corresponding to each item may be a probability distribution of a plurality of candidate options corresponding to each item.

The another-item related information collection module is configured to obtain related information of another item, and input the related information of the another item into the training and inference module. The related information of the another item includes at least one of another item obtained before a current update and a network status corresponding to the another item obtained before the current update. For example, the network status corresponding to the another item may be a probability distribution of a plurality of candidate options corresponding to the another item.

For ease of description and understanding, updating the at least two items may be understood as that at least two agents respectively complete at least two update tasks, and each agent corresponds to one update task. A plurality of agents may form a multi-agent system (multi-agent system, MAS) to jointly implement the foregoing update tasks. For example, the updating the at least two items may include updating the neural network model and a preprocessing manner. One agent is configured to update the neural network model, and the other agent is configured to update the preprocessing manner. It should be understood that in embodiments of this application, the "agent" is merely a concept introduced for ease of description, and constitutes no limitation on embodiments of this application.

If N items are updated, the apparatus shown in FIG. 10 may include N agents. Each agent may include an environment status observation module, a training and inference module, and an output module.

Optionally, each agent may further include a historical information storage module and an another-item related information collection module.

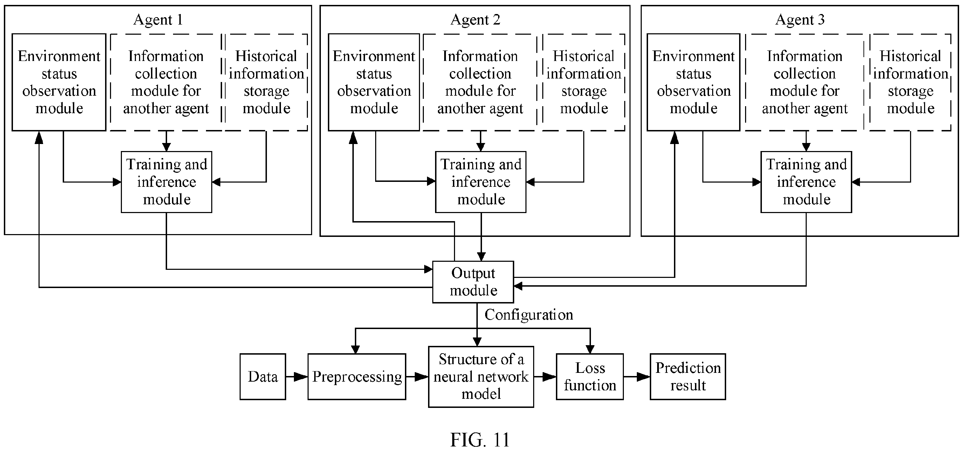

FIG. 11 is a block diagram of a system for updating a neural network model according to an embodiment of this application. FIG. 11 shows three agents: an agent 1, an agent 2, and an agent 3. Three items to be updated are respectively a preprocessing manner, a structure of the neural network model, and a loss function. The agent 1 is configured to update the preprocessing mode. The agent 2 is configured to update the structure of the neural network model. The agent 3 is configured to update the loss function. The following describes the method 900 by using FIG. 11 as an example.

(A-1) The agent 1, the agent 2, and the agent 3 respectively output the preprocessing manner, the structure of the neural network model, and the loss function. Primary performing of this step may be understood as an initialization process of the three agents, and this step corresponds to the foregoing step 910. Secondary performing and further performing of this step may be understood as an update process of the three agents, and may correspond to the update process in the foregoing step 940.

FIG. 11 only shows an example of updating three items, and another item in a related parameter of the neural network model may be fixed. For example, parameters such as a hyper-parameter and an evaluation manner of the neural network model may be preset in an update process of the neural network model. If the related parameter of the neural network model includes a compression manner of the neural network model, the compression manner of the neural network model may also be preset.

In FIG. 11, update processes of the three agents may be completed by the respective training and inference modules.

Specifically, for the agent 1, the environment status observation module collects an evaluation result of a trained neural network, and inputs the evaluation result into the training and inference module. The training and inference module performs training and inference based on information input by the environment status observation module, to obtain an updated preprocessing manner. The other two agents may perform a same operation to separately obtain an updated structure of the neural network model and an updated loss function.

Optionally, the environment status observation module may further collect training resource status information, and input the training resource status information to the training and inference module.

Optionally, the three agents each may further include an another-agent information collection module and a historical information storage module. The another-agent information collection module is the another-item related information collection module in FIG. 10.

Specifically, for the agent 1, the training and inference module may perform training and inference based on information input by the environment status observation module, the another-agent information collection module, and the history information storage module, to obtain an updated preprocessing manner. The other two agents may perform a same operation to separately obtain an updated structure of the neural network model and an updated loss function.

(A-2) If the related parameter of the neural network model does not include the compression manner of the neural network model, perform step (A-2a); or if the related parameter of the neural network model includes the compression manner of the neural network model, perform step (A-2a) or step (A-2b) based on a situation.

(A-2a) includes:
preprocessing training data in the preprocessing manner in step (A-1), and inputting preprocessed training data into the neural network model in step (A-1) to obtain a prediction label.

(A-2b) includes:

preprocessing training data in the preprocessing manner in step (A-1);
processing the neural network model in step (A-1) in the foregoing compression manner of the neural network model, where the processing the neural network model may be quantizing and/or compressing the neural network model; and
inputting preprocessed training data into a processed neural network model to obtain a prediction label.

(A-3) If the related parameter of the neural network model does not include the compression manner of the neural network model, perform step (A-3a); or if the related parameter of the neural network model includes the compression manner of the neural network model, perform step (A-3a) or step (A-3b) based on a situation, where step (A-2a) corresponds to step (A-3b), and step (A-2b) corresponds to step (A-3a), and step (A-2) and step (A-3) correspond to step 920 and step 930 in the method 900.

(A-3a) includes:
determining a function value of the loss function based on the prediction label and a label of the training data, and training the neural network model based on the function value of the loss function and the hyper-parameter of the neural network model to obtain the trained neural network model.

(A-3b) includes:
determining a function value of the loss function based on the prediction label and a label of the training data, and training the neural network model based on the function value of the loss function and the hyper-parameter of the neural network model to obtain the trained neural network model.

The trained neural network model in step (A-2a) is processed in the foregoing compression manner of the neural network model to obtain the processed neural network model, where the processing the trained neural network model may be quantizing and/or compressing the trained neural network model.

Then, the processed neural network model is trained to obtain the trained neural network model.

(A-4) Evaluate the trained neural network model in the evaluation manner in step (A-1) to obtain the evaluation result of the trained neural network model.

For ease of description, the foregoing step (A-2) to step (A-4) may be understood as that the three agents output actions to an environment to obtain the evaluation result.

(A-5) If an evaluation result of the updated neural network model does not meet a preset condition and/or a quantity of update times does not reach a preset quantity of times, repeat step (A-1) to step (A-4).

That the evaluation result reaches the preset condition may be that the update process converges. The preset condition may be set by a user. For example, the preset condition may be at least one of target inference accuracy, a target inference delay, and a target memory space. This is merely an example. The preset condition may alternatively be any target set by the user.

If a termination condition is met, the three agents respectively output a final preprocessing manner, a final structure of the neural network model, and a final loss function, which respectively correspond to final actions output by the three agents. The three final actions may be used as a configuration, namely, a final result to be output.

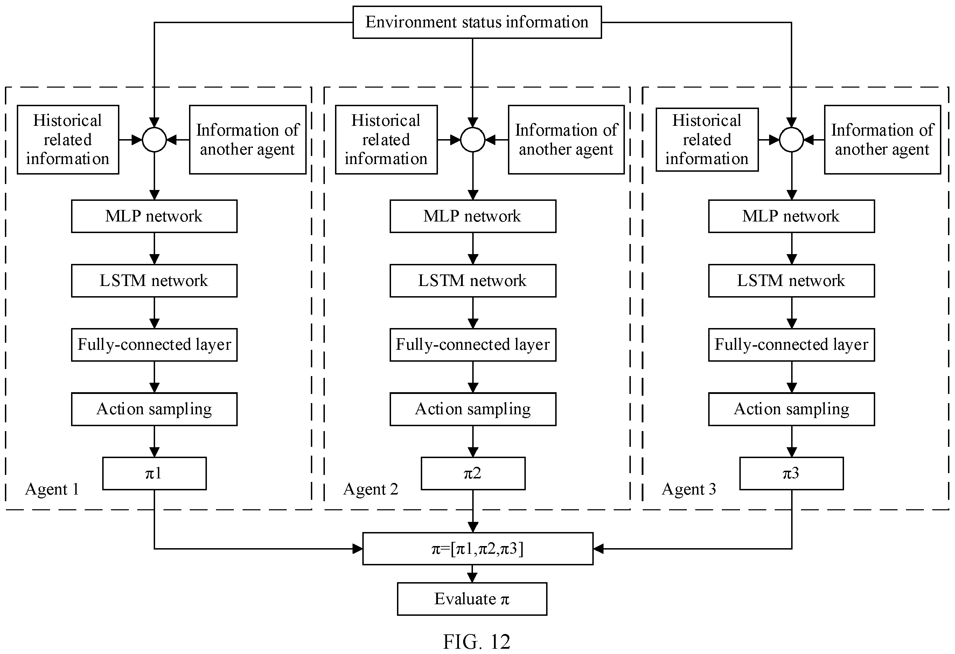

FIG. 12 is a schematic flowchart of a neural network model update method according to another embodiment of this application. The method shown in FIG. 12 may be performed by the apparatus in FIG. 11. The method shown in FIG. 12 includes step 1210 to step 1280. The following describes step 1210 to step 1280 in detail.

1210: Obtain an action of each agent based on collected environment status information, collected historical related information, and collected information of another agent.

The environment status information in FIG. 12 may include a training resource status in a current training environment and an evaluation result. The training resource status in the current training environment may include a total quantity of training machines and a quantity of currently available training machines. The environment status information may be collected by the environment status observation module in FIG. 11.

The information of the another agent in FIG. 12 is the foregoing related information of the another agent. Specifically, the information of the another agent may include an action of the another agent and a network status of the another agent. The action of the another agent is another item, and the network status of the another agent may include a probability distribution corresponding to the action output by the another agent. The information of the another agent may be collected by the another-agent information collection module in FIG. 11. A frequency of exchanging the information of the another agent between the agents and content of the information of the another agent may be determined based on a task type and a task scale. The exchange of the information of the another agent may be instant information exchange, or may be information exchange at a preset frequency or at a preset time interval. For example, the agent 1 may buffer an action, a network status, and the like of the agent 1, and wait for a next information exchange. For another example, after receiving the information of the another agent, the another-agent information collection module of the agent 1 stores the information, and transmits the information to the training and inference module after a preset time interval.

The historical related information in FIG. 12 may be obtained by the historical related information collection module in FIG. 11. The historical related information may include environment status information, a historical action of an agent, a historical network status of the agent, and the like.

Specifically, step 1210 includes step 1211 to step 1215.

1211: Input the collected environment status information, the collected historical related information, and the collected information of the another agent into a multi-layer perceptron (multi layer perceptron, MLP) network.

Specifically, the environment status information, the historical related information, and the information of the another agent may be spliced into a vector, and the vector is input into the MLP network.

1212: Process the environment status information, the historical related information, and the information of the another agent to obtain a mapped vector, and input the mapped vector into a long short-term memory (long short term memory, LSTM) network by using the MLP network.

Specifically, a dimension of the mapped vector may be determined based on an input dimension of the LSTM network.

1213: Process the mapped vector by using the LSTM network to obtain a feature map.

Specifically, the feature map may be obtained based on a dimension of an action space, namely, an output dimension, or an input dimension of a fully-connected layer.

1214: Obtain, by using the fully-connected layer based on the feature map, a probability distribution of the action output by the agent.

Specifically, the fully-connected layers in the three agents separately obtain probability distributions of respective actions based on respective feature maps. For example, if the agent 1, the agent 2, and the agent 3 correspond to the preprocessing manner, the structure of the neural network model, and the loss function respectively, a probability distribution of the preprocessing manner, a probability distribution of the structure of the neural network model, and a probability distribution of the loss function may be respectively obtained in step 1214.

1215: Perform action sampling based on the probability distributions of the respective actions of the three agents to obtain output actions.

For example, if the agent 1, the agent 2, and the agent 3 correspond to the preprocessing manner, the structure of the neural network model, and the loss function respectively, in step 1215, the agent 1 obtains an output preprocessing manner $\pi 1$, the agent 2 obtains an output structure $\pi 2$ of the neural network model, and the agent 3 obtains an output loss function $\pi 3$.

The neural network model $\pi 2$ may be a neural network model that is not trained.

For example, an action output by the agent 1 may be represented by a discrete value. A set of actions output by the agent 1 is A={1, 2, 3..., N}, and a corresponding probability distribution set is P={$p_1$, $p_2$, $p_3$, ..., $p_N$}, where N is a positive integer, and N represents a quantity of current candidate actions of the agent 1. In step 1215, a current action output by the agent is obtained through sampling from the set of actions based on the probability distribution set of the actions.

1220: Evaluate the actions output by the three agents in the foregoing step in an environment.

The actions or policies output by the three agents may be understood as a policy group $\pi = \{\pi 1, \pi 2, \pi 3\}$.

Specifically, the preprocessing manner $\pi 1$, the structure $\pi 2$ of the neural network model, and the loss function π3 are applied to a service procedure. Training the structure π2 of the neural network model is correcting a parameter in the structure π2 of the neural network model, namely, training the neural network model to obtain a trained neural network model. The evaluating the actions output by the three agents is evaluating performance of the trained neural network model, for example, evaluating inference accuracy of the trained neural network model or evaluating an inference delay of the trained network model. A specific process is described in the foregoing steps (A-2) to (A-4). Details are not described herein again.

1230: Determine whether an update result meets a termination condition. If the termination condition is not met, step 1210 to step 1220 are repeated. If the termination condition is met, current actions of the three agents are output.

For example, that the update result meets the termination condition may be that an evaluation result of an updated neural network model meets a preset condition or a quantity of update times reaches a preset quantity of times. In other words, after at least two of a related parameter of the neural network model and a structure of the neural network model are updated, the neural network model is evaluated again. If the update result does not meet the termination condition, the at least two of the related parameter of the neural network model and the structure of the neural network model continue to be updated until the update result meets the termination condition. That the update result does not meet the termination condition may be that the evaluation result of the updated neural network model does not meet the preset condition and the quantity of update times does not reach the preset quantity of times.

Step 1210 to step 1220 may be understood as a process of one iteration.

It should be understood that any one of the related parameter of the neural network model and the structure of the neural network model may correspond to one agent. FIG. 12 only shows an example of updating three agents, and the three agents are merely used as an example. In a specific application scenario, a quantity of agents may be set based on a requirement. In other words, a quantity of items that need to be updated is set based on a requirement.

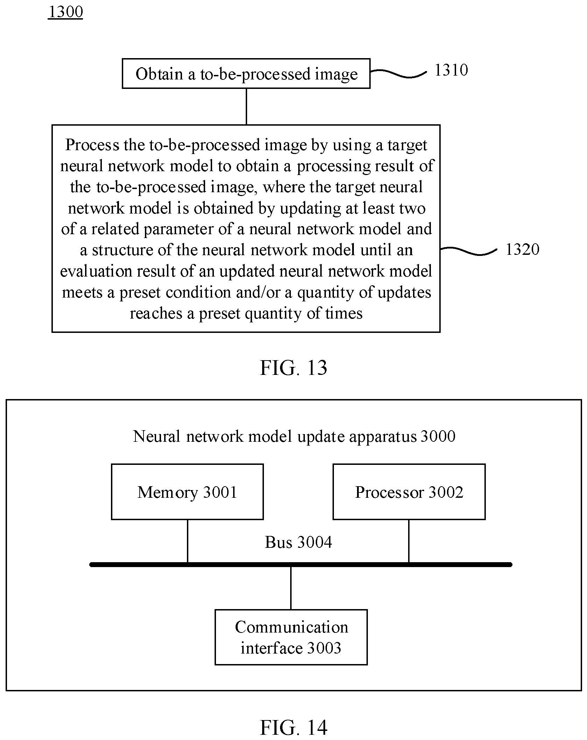

FIG. 13 is a schematic flowchart of an image processing method 1300 according to an embodiment of this application. The method may be performed by an apparatus or a device that can perform image processing. For example, the method may be performed by a terminal device, a computer, a server, or the like.

A target neural network used in the image processing method 1300 in FIG. 13 may be constructed by using the method in FIG. 9 or the method in FIG. 12. The method 1300 includes step 1310 to step 1320. For a specific implementation of the method 1300, refer to the foregoing method 900. To avoid unnecessary repetition, repeated descriptions are properly omitted when the method 1300 is described below.

1310: Obtain a to-be-processed image.

The to-be-processed image may be an image photographed by a terminal device (or another apparatus or device such as a computer or a server) by using a camera, or the to-be-processed image may be an image obtained from a terminal device (or another apparatus or device such as a computer or a server) (for example, an image stored in an album of the terminal device, or an image obtained by the terminal device from a cloud). This is not limited in this embodiment of this application.

1320: Process the to-be-processed image by using the target neural network model to obtain a processing result of the to-be-processed image.

The target neural network model is obtained by updating at least two of a related parameter of a neural network model and a structure of the neural network model until an evaluation result of an updated neural network model meets a preset condition and/or a quantity of update times reaches a preset quantity of times. The related parameter of the neural network model includes a hyper-parameter, a loss function, and an evaluation manner of the neural network model. The neural network model is obtained by determining a function value of the loss function based on a prediction label and a label of training data and performing training based on the function value of the loss function and the hyper-parameter of the neural network model. The prediction label is obtained by inputting the training data into the neural network model for processing.

Optionally, the related parameter of the neural network model further includes a preprocessing manner. The prediction label is obtained by preprocessing the training data in the preprocessing manner and inputting preprocessed training data into the neural network model for processing.

Optionally, the related parameter of the neural network model further includes a compression manner of the neural network model. The prediction label is obtained by processing the neural network model in the compression manner of the neural network model and inputting the training data into a processed neural network model.

Optionally, the updating at least two of a related parameter of the neural network model and a structure of the neural network model includes: determining, based on first information corresponding to each item of the at least two of the related parameter of the neural network model and the structure of the neural network model, a probability distribution of a plurality of candidate options corresponding to each item, where the first information corresponding to each item includes an evaluation result; and determining one candidate option in the plurality of candidate options corresponding to each item as an updated option of each item based on the probability distribution of the plurality of candidate options corresponding to each item.

Optionally, the first information corresponding to each item further includes related information of another item in the at least two of the related parameter of the neural network model and the structure of the neural network model. The related information of the another item includes the another item and/or a probability distribution of a plurality of candidate options corresponding to the another item.

Optionally, the first information corresponding to each item further includes historical related information of each item. The historical related information of each item includes the updated option of each item in the previous update and/or a probability distribution of the plurality of candidate options corresponding to each item in the previous update.

Optionally, the first information corresponding to each item further includes training resource status information. The training resource status information includes a quantity of training machines.

FIG. 14 is a schematic diagram of a hardware structure of a neural network model update apparatus according to an embodiment of this application. The neural network model update apparatus 3000 shown in FIG. 14 (the apparatus 3000 may specifically be a computer device) includes a memory 3001, a processor 3002, a communication interface 3003, and a bus 3004. The memory 3001, the processor 3002, and the communication interface 3003 are communicatively connected to each other through the bus 3004.

The memory 3001 may be a read-only memory (read only memory, ROM), a static storage device, a dynamic storage device, or a random access memory (random access memory, RAM). The memory 3001 may store a program. When the program stored in the memory 3001 is executed by the processor 3002, the processor 3002 is configured to perform the steps of the neural network model update method in embodiments of this application. Specifically, the processor 3002 may perform step 910 to step 940 in the foregoing method shown in FIG. 9.

The processor 3002 may be a general-purpose central processing unit (central processing unit, CPU), a microprocessor, an application-specific integrated circuit (application specific integrated circuit, ASIC), a graphics processing unit (graphics processing unit, GPU), or one or more integrated circuits, and is configured to execute a related program, to implement the neural network model update method in the method embodiments of this application.

Alternatively, the processor 3002 may be an integrated circuit chip and has a signal processing capability. For example, the processor 3002 may be the chip shown in FIG. 5. In an implementation process, the steps of the neural network model update method in this application may be completed by using a hardware integrated logic circuit in the processor 3002 or instructions in a form of software.

The processor 3002 is configured to obtain a structure of a neural network model and a related parameter of the neural network model. The related parameter of the neural network model includes a hyper-parameter, a loss function, and an evaluation manner of the neural network model. The processor 3002 is further configured to: input training data into the neural network model for processing to obtain a prediction label; determine a function value of the loss function based on the prediction label and a label of the training data, and train the neural network model based on the function value of the loss function and the hyper-parameter of the neural network model to obtain a trained neural network model; and evaluate the trained neural network model in the evaluation manner, and if an evaluation result of the trained neural network model does not meet a preset condition, update at least two of the related parameter of the neural network model and the structure of the neural network model until an evaluation result of an updated neural network model meets the preset condition and/or a quantity of update times reaches a preset quantity of times.

Optionally, the related parameter of the neural network model further includes a preprocessing manner. The processor 3002 is configured to preprocess the training data in the preprocessing manner, and input preprocessed training data into the neural network model for processing to obtain the prediction label.

Optionally, the related parameter of the neural network model further includes a compression manner of the neural network model. The processor 3002 is configured to process the neural network model in the compression manner of the neural network model, and input the training data into a processed neural network model to obtain the prediction label.

Optionally, the processor 3002 is configured to: determine, based on first information corresponding to each item of the at least two of the related parameter of the neural network model and the structure of the neural network model, a probability distribution of a plurality of candidate options corresponding to each item, where the first information corresponding to each item includes the evaluation result; and determine one candidate option in the plurality of candidate options corresponding to each item as an updated option of each item based on the probability distribution of the plurality of candidate options corresponding to each item.

Optionally, the first information corresponding to each item further includes related information of another item in the at least two. The related information of the another item includes the another item and/or a probability distribution of a plurality of candidate options corresponding to the another item.

Optionally, the first information corresponding to each item further includes historical related information of each item. The historical related information of each item includes the updated option of each item in the previous update and/or a probability distribution of the plurality of candidate options corresponding to each item in the previous update.

Optionally, the first information corresponding to each item further includes training resource status information. The training resource status information includes a quantity of training machines.

Optionally, the hyper-parameter of the neural network model includes a parameter that remains unchanged in a training process of the neural network model.

Optionally, the hyper-parameter of the neural network model includes one or more of the following: a learning rate of the neural network model, a weight decay coefficient of the neural network model, a label smooth coefficient of the neural network model, or a dropout parameter of the neural network model.

The processor 3002 may alternatively be a general-purpose processor, a digital signal processor (digital signal processing, DSP), an application-specific integrated circuit (ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor, or the like. The steps of the methods disclosed with reference to embodiments of this application may be directly performed and completed by a hardware decoding processor, or may be performed and completed by using a combination of hardware and software modules in the decoding processor. The software module may be located in a storage medium mature in the art, such as a random access memory, a flash memory, a read-only memory, a programmable read-only memory, an electrically erasable programmable memory, a register, or the like. The storage medium is located in the memory 3001. The processor 3002 reads information in the memory 3001, and completes, in combination with hardware of the processor 3002, a function that needs to be executed by a unit included in the neural network model update apparatus in this embodiment of this application, or performs the neural network model update method in embodiments of this application.

The communication interface 3003 uses a transceiver apparatus, for example but not limited to, a transceiver, to implement communication between the apparatus 3000 and another device or a communication network. For example, an updated performance indicator of the neural network model and training data required in a machine learning process may be obtained through the communication interface 3003.

The bus 3004 may include a path for transmitting information between the components (for example, the memory 3001, the processor 3002, and the communication interface 3003) of the apparatus 3000.

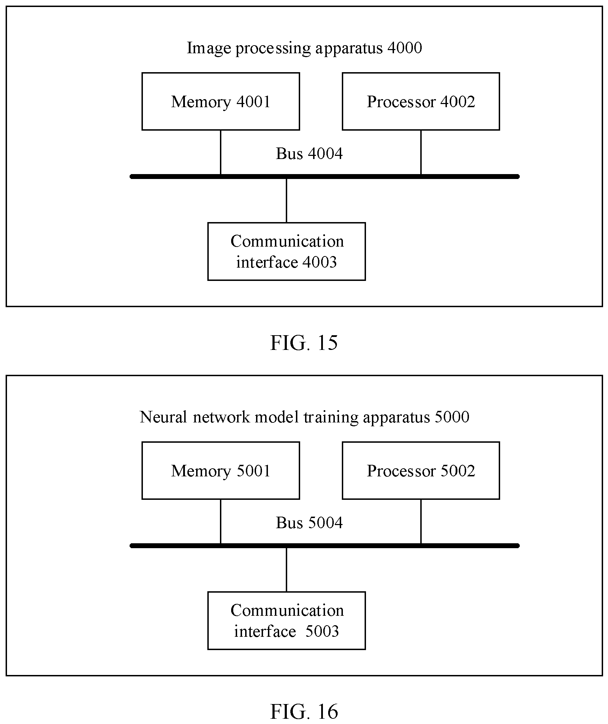

FIG. 15 is a schematic diagram of a hardware structure of an image processing apparatus according to an embodiment of this application. The image processing apparatus 4000 shown in FIG. 15 includes a memory 4001, a processor 4002, a communication interface 4003, and a bus 4004. The memory 4001, the processor 4002, and the communication interface 4003 are communicatively connected to each other through the bus 4004.

The memory 4001 may be a ROM, a static storage device, or a RAM. The memory 4001 may store a program. When the program stored in the memory 4001 is executed by the processor 4002, the processor 4002 and the communication interface 4003 are configured to perform the steps of the image processing method in embodiments of this application. Specifically, the processor 4002 may perform step 1310 to step 1320 in the foregoing method shown in FIG. 13.

The processor 4002 may be a general-purpose CPU, a microprocessor, an ASIC, a GPU, or one or more integrated circuits, and is configured to execute a related program, to implement a function that needs to be executed by a unit in the image processing apparatus in this embodiment of this application, or perform the image processing method in the method embodiments of this application.

Alternatively, the processor 4002 may be an integrated circuit chip and has a signal processing capability. For example, the processor 3002 may be the chip shown in FIG. 5. In an implementation process, the steps of the image processing method in embodiments of this application may be completed by using a hardware integrated logic circuit in the processor 4002 or instructions in a form of software.

The processor 4002 is configured to obtain a to-be-processed image, and process the to-be-processed image by using a target neural network model to obtain a processing result of the to-be-processed image. The target neural network model is obtained by updating at least two of a related parameter of a neural network model and a structure of the neural network model until an evaluation result of an updated neural network model meets a preset condition and/or a quantity of update times reaches a preset quantity of times. The related parameter of the neural network model includes a hyper-parameter, a loss function, and an evaluation manner of the neural network model. The neural network model is obtained by determining a function value of the loss function based on a prediction label and a label of training data and performing training based on the function value of the loss function and the hyper-parameter of the neural network model. The prediction label is obtained by inputting the training data into the neural network model for processing.

Optionally, the related parameter of the neural network model further includes a preprocessing manner. The prediction label is obtained by preprocessing the training data in the preprocessing manner and inputting preprocessed training data into the neural network model for processing.

Optionally, the related parameter of the neural network model further includes a compression manner of the neural network model. The prediction label is obtained by processing the neural network model in the compression manner of the neural network model and inputting the training data into a processed neural network model.

Optionally, the updating at least two of the related parameter of the neural network model and the structure of the neural network model includes: determining, based on first information corresponding to each item of the at least two of the related parameter of the neural network model and the structure of the neural network model, a probability distribution of a plurality of candidate options corresponding to each item, where the first information corresponding to each item includes the evaluation result; and determining one candidate option in the plurality of candidate options corresponding to each item as an updated option of each item based on the probability distribution of the plurality of candidate options corresponding to each item.

Optionally, the first information corresponding to each item further includes related information of another item in the at least two of the related parameter of the neural network model and the structure of the neural network model. The related information of the another item includes the another item and/or a probability distribution of a plurality of candidate options corresponding to the another item.

Optionally, the first information corresponding to each item further includes historical related information of each item. The historical related information of each item includes the updated option of each item in the previous update and/or a probability distribution of the plurality of candidate options corresponding to each item in the previous update.

Optionally, the first information corresponding to each item further includes training resource status information. The training resource status information includes a quantity of training machines.

Optionally, the hyper-parameter of the neural network model includes a parameter that remains unchanged in a training process of the neural network model.

Optionally, the hyper-parameter of the neural network model includes one or more of the following: a learning rate of the neural network model, a weight decay coefficient of the neural network model, a label smooth coefficient of the neural network model, or a dropout parameter of the neural network model.

The foregoing processor 4002 may alternatively be a general-purpose processor, a DSP, an ASIC, an FPGA or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor, or the like. The steps of the methods disclosed with reference to embodiments of this application may be directly performed and completed by a hardware decoding processor, or may be performed and completed by using a combination of hardware and software modules in the decoding processor. The software module may be located in a storage medium mature in the art, such as a random access memory, a flash memory, a read-only memory, a programmable read-only memory, an electrically erasable programmable memory, a register, or the like. The storage medium is located in the memory 4001. The processor 4002 reads information in the memory 4001, and completes, in combination with hardware of the processor 4002, a function that needs to be executed by a unit included in the image processing apparatus in this embodiment of this application, or performs the image processing method in the method embodiments of this application.

The communication interface 4003 uses a transceiver apparatus, for example but not limited to, a transceiver, to implement communication between the apparatus 4000 and another device or a communication network. For example, the to-be-processed image may be obtained through the communication interface 4003.

The bus 4004 may include a path for transmitting information between components (for example, the memory 4001, the processor 4002, and the communication interface 4003) of the apparatus 4000.

FIG. 16 is a schematic diagram of a hardware structure of a neural network model training apparatus according to an embodiment of this application. Similar to the foregoing apparatus 3000 and the foregoing apparatus 4000, a neural network model training apparatus 5000 shown in FIG. 16 includes a memory 5001, a processor 5002, a communication interface 5003, and a bus 5004. The memory 5001, the processor 5002, and the communication interface 5003 are communicatively connected to each other through the bus 5004.

After a neural network model and/or a parameter of the neural network model may be obtained by using the neural network model update apparatus shown in FIG. 14, the neural network model may be trained by using the neural network model training apparatus 5000 shown in FIG. 16, and a trained neural network model may be used for performing the image processing method in embodiments of this application.

Specifically, the apparatus shown in FIG. 16 may obtain training data and a to-be-trained neural network model from the outside through the communication interface 5003, and then the processor trains the to-be-trained neural network model based on the training data.

It should be noted that, although only the memory, the processor, and the communication interface are shown in each of the apparatus 3000, the apparatus 4000, and the apparatus 5000, in a specific implementation process, a person skilled in the art should understand that the apparatus 3000, the apparatus 4000, and the apparatus 5000 each may further include another component necessary for normal running. In addition, based on a specific requirement, a person skilled in the art should understand that the apparatus 3000, the apparatus 4000, and the apparatus 5000 each may further include a hardware component for implementing another additional function. In addition, a person skilled in the art should understand that the apparatus 3000, the apparatus 4000, and the apparatus 5000 each may include only components necessary for implementing embodiments of this application, but not necessarily include all the components shown in FIG. 14, FIG. 15, and FIG. 16.

It should be understood that, the processor in this embodiment of this application may be a central processing unit (central processing unit, CPU). The processor may be further another general-purpose processor, a digital signal processor (digital signal processor, DSP), an application-specific integrated circuit (application specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor, or the like.

It can be further understood that the memory in this embodiment of this application may be a volatile memory or a nonvolatile memory, or may include the volatile memory and the nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of example but not limitative description, many forms of random access memories (random access memory, RAM) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

All or some of the foregoing embodiments may be implemented by using software, hardware, firmware, or any combination thereof. When the software is used for implementing embodiments, all or some of the foregoing embodiments may be implemented in a form of a computer program product. The computer program product includes one or more computer instructions or computer programs. When the computer instructions or the computer programs are loaded or executed on a computer, the procedures or functions according to embodiments of this application are completely or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually represents an "or" relationship between the associated objects, or may represent an "and/or" relationship. A specific meaning depends on a context.

In this application, "at least one" means one or more, and "a plurality of" means two or more. "At least one of the following" or a similar expression thereof indicates any combination of the following, including any combination of one or more of the following. For example, at least one item (piece) of a, b, or c may indicate a, b, c, a and b, a and c, b and c, or a, b, and c, where a, b, and c may be singular or plural.

It should be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one location, or may be distributed on a plurality of network units. Some or all of the units may be selected based on actual requirements to achieve the objective of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A neural network model update method, comprising:

    obtaining a structure of a neural network model and a related parameter of the neural network model, wherein the related parameter of the neural network model comprises a hyper-parameter, a loss function, and an evaluation manner of the neural network model;
    inputting training data into the neural network model for processing to obtain a prediction label;
    determining a function value of the loss function based on the prediction label and a label of the training data, and training the neural network model based on the function value of the loss function and the hyper-parameter of the neural network model to obtain a trained neural network model; and
    evaluating the trained neural network model in the evaluation manner, and if an evaluation result of the trained neural network model does not meet a preset condition, updating at least two of the related parameter of the neural network model and the structure of the neural network model until an evaluation result of an updated neural network model meets the preset condition and/or a quantity of update times reaches a preset quantity of times.

2. The method according to claim 1, wherein the related parameter of the neural network model further comprises a preprocessing manner, and
    the inputting training data into the neural network model for processing to obtain a prediction label comprises:

    preprocessing the training data in the preprocessing manner; and
    inputting preprocessed training data into the neural network model for processing to obtain the prediction label.

3. The method according to claim 1 or 2, wherein the related parameter of the neural network model further comprises a compression manner of the neural network model, and
    the inputting training data into the neural network model for processing to obtain a prediction label comprises:

    processing the neural network model in the compression manner of the neural network model to obtain a processed neural network model; and
    inputting the training data into the processed neural network model to obtain the prediction label.

4. The method according to any one of claims 1 to 3, wherein the updating at least two of the related parameter of the neural network model and the structure of the neural network model comprises:

determining, based on first information corresponding to each item of the at least two of the related parameter of the neural network model and the structure of the neural network model, a probability distribution of a plurality of candidate options corresponding to each item, wherein the first information corresponding to each item comprises the evaluation result; and

determining one candidate option in the plurality of candidate options corresponding to each item as an updated option of each item based on the probability distribution of the plurality of candidate options corresponding to each item.

5. The method according to claim 4, wherein the first information corresponding to each item further comprises related information of another item in the at least two of the related parameter of the neural network model and the structure of the neural network model, and the related information of the another item comprises the another item and/or a probability distribution of a plurality of candidate options corresponding to the another item.

6. The method according to claim 5, wherein the first information corresponding to each item further comprises historical related information of each item, and the historical related information of each item comprises the updated option of each item in the previous update and/or a probability distribution of the plurality of candidate options corresponding to each item in the previous update.

7. The method according to any one of claims 4 to 6, wherein the first information corresponding to each item further comprises training resource status information, and the training resource status information comprises a quantity of training machines.

8. The method according to any one of claims 1 to 7, wherein the hyper-parameter of the neural network model comprises a parameter that remains unchanged in a training process of the neural network model.

9. The method according to any one of claims 1 to 8, wherein the hyper-parameter of the neural network model comprises one or more of the following: a learning rate of the neural network model, a weight decay coefficient of the neural network model, a label smooth coefficient of the neural network model, or a dropout parameter of the neural network model.

10. An image processing method, comprising:

obtaining a to-be-processed image; and

processing the to-be-processed image by using a target neural network model to obtain a processing result of the to-be-processed image, wherein

the target neural network model is obtained by updating at least two of a related parameter of a neural network model and a structure of the neural network model until an evaluation result of an updated neural network model meets a preset condition and/or a quantity of update times reaches a preset quantity of times, the related parameter of the neural network model comprises a hyper-parameter, a loss function, and an evaluation manner of the neural network model, the neural network model is obtained by determining a function value of the loss function based on a prediction label and a label of training data and performing training based on the function value of the loss function and the hyper-parameter of the neural network model, and the prediction label is obtained by inputting the training data into the neural network model for processing.

11. The method according to claim 10, wherein the related parameter of the neural network model further comprises a preprocessing manner, and the prediction label is obtained by preprocessing the training data in the preprocessing manner, and inputting preprocessed training data into the neural network model for processing.

12. The method according to claim 10 or 11, wherein the related parameter of the neural network model further comprises a compression manner of the neural network model, and the prediction label is obtained by processing the neural network model in the compression manner of the neural network model, and inputting the training data into a processed neural network model.

13. The method according to any one of claims 10 to 12, wherein the updating at least two of the related parameter of the neural network model and the structure of the neural network model comprises:

determining, based on first information corresponding to each item of the at least two of the related parameter of the neural network model and the structure of the neural network model, a probability distribution of a plurality of candidate options corresponding to each item, wherein the first information corresponding to each item comprises the evaluation result; and

determining one candidate option in the plurality of candidate options corresponding to each item as an updated option of each item based on the probability distribution of the plurality of candidate options corresponding to each item.

14. The method according to claim 13, wherein the first information corresponding to each item further comprises related information of another item in the at least two of the related parameter of the neural network model and the structure of the neural network model, and the related information of the another item comprises the another item and/or a probability distribution of a plurality of candidate options corresponding to the another item.

15. The method according to claim 14, wherein the first information corresponding to each item further comprises historical related information of each item, and the historical related information of each item comprises the updated option of each item in the previous update and/or a probability distribution of the plurality of candidate options corresponding to each item in the previous update.

16. The method according to any one of claims 13 to 15, wherein the first information corresponding to each item further comprises training resource status information, and the training resource status information comprises a quantity of training machines.

17. The method according to any one of claims 10 to 16, wherein the hyper-parameter of the neural network model comprises a parameter that remains unchanged in a training process of the neural network model.

18. The method according to any one of claims 10 to 17, wherein the hyper-parameter of the neural network model comprises one or more of the following: a learning rate of the neural network model, a weight decay coefficient of the neural network model, a label smooth coefficient of the neural network model, or a dropout parameter of the neural network model.

19. A neural network model update apparatus, comprising:

an obtaining unit, configured to obtain a structure of a neural network model and a related parameter of the neural network model, wherein the related parameter of the neural network model comprises a hyper-parameter, a loss function, and an evaluation manner of the neural network model; and
an evaluation unit, configured to:

input training data into the neural network model for processing to obtain a prediction label;
determine a function value of the loss function based on the prediction label and a label of the training data, and train the neural network model based on the function value of the loss function and the hyper-parameter of the neural network model to obtain a trained neural network model; and
evaluate the trained neural network model in the evaluation manner, and if an evaluation result of the trained neural network model does not meet a preset condition, update at least two of the related parameter of the neural network model and the structure of the neural network model until an evaluation result of an updated neural network model meets the preset condition and/or a quantity of update times reaches a preset quantity of times.

20. The apparatus according to claim 19, wherein the related parameter of the neural network model further comprises a preprocessing manner, and the evaluation unit is configured to:

preprocess the training data in the preprocessing manner; and
input preprocessed training data into the neural network model for processing to obtain the prediction label.

21. The apparatus according to claim 19 or 20, wherein the related parameter of the neural network model further comprises a compression manner of the neural network model, and the evaluation unit is configured to:

process the neural network model in the compression manner of the neural network model to obtain a processed neural network model; and
input the training data into the processed neural network model to obtain the prediction label.

**22.** The apparatus according to any one of claims 19 to 21, wherein the evaluation unit is configured to:

determine, based on first information corresponding to each item of the at least two of the related parameter of the neural network model and the structure of the neural network model, a probability distribution of a plurality of candidate options corresponding to each item, wherein the first information corresponding to each item comprises the evaluation result; and

determine one candidate option in the plurality of candidate options corresponding to each item as an updated option of each item based on the probability distribution of the plurality of candidate options corresponding to each item.

**23.** The apparatus according to claim 22, wherein the first information corresponding to each item further comprises related information of another item in the at least two, and the related information of the another item comprises the another item and/or a probability distribution of a plurality of candidate options corresponding to the another item.

**24.** The apparatus according to claim 23, wherein the first information corresponding to each item further comprises historical related information of each item, and the historical related information of each item comprises the updated option of each item in the previous update and/or a probability distribution of the plurality of candidate options corresponding to each item in the previous update.

**25.** The apparatus according to any one of claims 22 to 24, wherein the first information corresponding to each item further comprises training resource status information, and the training resource status information comprises a quantity of training machines.

**26.** The apparatus according to any one of claims 19 to 25, wherein the hyper-parameter of the neural network model comprises a parameter that remains unchanged in a training process of the neural network model.

**27.** The apparatus according to any one of claims 19 to 26, wherein the hyper-parameter of the neural network model comprises one or more of the following: a learning rate of the neural network model, a weight decay coefficient of the neural network model, a label smooth coefficient of the neural network model, or a dropout parameter of the neural network model.

**28.** An image processing apparatus, comprising:

an obtaining unit, configured to obtain a to-be-processed image; and

an image processing unit, configured to process the to-be-processed image by using a target neural network model to obtain a processing result of the to-be-processed image, wherein

the target neural network model is obtained by updating at least two of a related parameter of a neural network model and a structure of the neural network model until an evaluation result of an updated neural network model meets a preset condition and/or a quantity of update times reaches a preset quantity of times, the related parameter of the neural network model comprises a hyper-parameter, a loss function, and an evaluation manner of the neural network model, the neural network model is obtained by determining a function value of the loss function based on a prediction label and a label of training data and performing training based on the function value of the loss function and the hyper-parameter of the neural network model, and the prediction label is obtained by inputting the training data into the neural network model for processing.

**29.** The apparatus according to claim 28, wherein the related parameter of the neural network model further comprises a preprocessing manner, and the prediction label is obtained by preprocessing the training data in the preprocessing manner, and inputting preprocessed training data into the neural network model for processing.

**30.** The apparatus according to claim 28 or 29, wherein the related parameter of the neural network model further comprises a compression manner of the neural network model, and the prediction label is obtained by processing the neural network model in the compression manner of the neural network model, and inputting the training data into a processed neural network model.

**31.** The apparatus according to any one of claims 28 to 30, wherein the updating at least two of the related parameter of the neural network model and the structure of the neural network model comprises:

determining, based on first information corresponding to each item of the at least two of the related parameter of the neural network model and the structure of the neural network model, a probability distribution of a plurality of candidate options corresponding to each item, wherein the first information corresponding to each item comprises the evaluation result; and

determining one candidate option in the plurality of candidate options corresponding to each item as an updated option of each item based on the probability distribution of the plurality of candidate options corresponding to each item.

32. The apparatus according to claim 31, wherein the first information corresponding to each item further comprises related information of another item in the at least two of the related parameter of the neural network model and the structure of the neural network model, and the related information of the another item comprises the another item and/or a probability distribution of a plurality of candidate options corresponding to the another item.

33. The apparatus according to claim 32, wherein the first information corresponding to each item further comprises historical related information of each item, and the historical related information of each item comprises the updated option of each item in the previous update and/or a probability distribution of the plurality of candidate options corresponding to each item in the previous update.

34. The apparatus according to any one of claims 31 to 33, wherein the first information corresponding to each item further comprises training resource status information, and the training resource status information comprises a quantity of training machines.

35. The apparatus according to any one of claims 28 to 34, wherein the hyper-parameter of the neural network model comprises a parameter that remains unchanged in a training process of the neural network model.

36. The apparatus according to any one of claims 28 to 35, wherein the hyper-parameter of the neural network model comprises one or more of the following: a learning rate of the neural network model, a weight decay coefficient of the neural network model, a label smooth coefficient of the neural network model, or a dropout parameter of the neural network model.

37. A neural network model update apparatus, comprising a processor and a memory, wherein the memory is configured to store program instructions, and the processor is configured to invoke the program instructions to perform the method according to any one of claims 1 to 9.

38. An image processing apparatus, comprising a processor and a memory, wherein the memory is configured to store program instructions, and the processor is configured to invoke the program instructions to perform the method according to any one of claims 10 to 18.

39. A computer-readable storage medium, wherein the computer-readable storage medium stores program code to be executed by a device, and the program code is used for performing the method according to any one of claims 1 to 9 or 10 to 18.

40. A chip, wherein the chip comprises a processor and a data interface, and the processor reads, through the data interface, instructions stored in a memory, to perform the method according to any one of claims 1 to 9 or 10 to 18.

Intelligent information chain

Smart product and industry application

| General capability | Translation/ Text analysis/... | Voice/Visual/Image/... |

Data

| Data processing | Data training/Machine learning/Deep learning | Search/Inference/ Decision-making | ... |

| Infrastructure | Sensor | Intelligent chip | Basic platform | ... |

IT value chain

FIG. 1

Data collection device 160

Data flow

Database 130

Training device 120

Data flow

System architecture 100

Execution device 110

Client device 140

Input data

I/O interface 112

Target model/rule 101

Calculation module 111

Output result

Preprocessing module 113

Preprocessing module 114

Data storage system 150

FIG. 2

Processing result of the image

Neural
network
layer
230

| Output layer 240 |
| Hidden layer n (23n) |
| Hidden layer 2 (232) |
| Hidden layer 1 (231) |

Convolutional
layer/
Pooling layer
220

| 226 |
| 225 |
| 224 |
| 223 |
| 222 |
| 221 |

Convolutional
neural network
(CNN)
200

Input layer 210

To-be-processed
image

FIG. 3

Image processing result

Neural
network
layer
230

Output layer 240

Hidden layer n (23n)

Hidden layer 2 (232)

Hidden layer 1 (231)

Convolutional
neural network
(CNN)
200

Convolutional
layer/Pooling
layer
220

| 226 | 226 | 226 |
| 225 | 225 | 225 |
| 224 | 224 | 224 |
| 223 | 223 | 223 |
| 222 | 222 | 222 |
| 221 | 221 | 221 |

Input layer
210

Input layer 210

To-be-processed image

FIG. 4

EP 4 064 130 A1

```
                                              ┌─────────────────┐
                                              │  Weight memory  │
                                              │      502        │
                                              └─────────────────┘
                                                       │
                                                       ▼
┌──────────┐                  ┌──────────────────┐  ┌──────────────────┐
│ Host CPU │◄────────┐        │ Input memory 501 │─►│ Operation circuit│
└──────────┘         │        └──────────────────┘  │      503         │◄┐
     │               │                  ▲            └──────────────────┘ │
     │               │                  │                    │            │
     │               │        ┌──────────────────┐  ┌─────────────┐      │
     │               │        │Vector calculation│◄►│ Accumulator │      │
     │               │        │    unit 507      │  │     508     │      │
     │               │        └──────────────────┘  └─────────────┘      │
     │               │                                                   │
     │    ┌────────────────┐  ┌──────────────┐  ┌────────────┐  ┌──────────────────┐
     │    │ Direct memory  │◄►│Unified memory│◄►│ Controller │◄─│ Instruction fetch│
     │    │access controller│  │     506      │  │    504     │  │    buffer 509    │
     │    │     505        │  └──────────────┘  └────────────┘  └──────────────────┘
     │    └────────────────┘                                            │
     │            │                                                     │
┌──────────┐  ┌──────────────────────────────────────────────────────────────┐
│ External │◄►│                   Bus interface unit 510                      │
│ memory   │  └──────────────────────────────────────────────────────────────┘
└──────────┘

                      Neural network processor 50
```

FIG. 5

300

Execution device 310

Data storage
system 350

...

Communication network

Local device
301

Local device
302

Examples

FIG. 6

FIG. 7

FIG. 8

900

Obtain a structure of a neural network model and a related parameter of the neural network model — 910

Input training data into the neural network model for processing to obtain a prediction label — 920

Determine a function value of a loss function based on the prediction label and a label of the training data, and train the neural network model based on the function value of the loss function and a hyper-parameter of the neural network model to obtain a trained neural network model — 930

Evaluate the trained neural network model in an evaluation manner, and if an evaluation result of the trained neural network model does not meet a preset condition, update at least two items of the related parameter of the neural network model and the structure of the neural network model until an evaluation result of an updated neural network model meets the preset condition and/or a quantity of updates reaches a preset quantity of times — 940

FIG. 9

Environment status observation module

Related information collection module for another item

Historical information storage module

Training and inference module

Output module

FIG. 10

EP 4 064 130 A1

| Agent 1 | Agent 2 | Agent 3 |
|---|---|---|

Environment status observation module

Information collection module for another agent

Historical information storage module

Training and inference module

Environment status observation module

Information collection module for another agent

Historical information storage module

Training and inference module

Environment status observation module

Information collection module for another agent

Historical information storage module

Training and inference module

Output module

Configuration

Data → Preprocessing → Structure of a neural network model → Loss function → Prediction result

FIG. 11

FIG. 12

1300

Obtain a to-be-processed image — 1310

Process the to-be-processed image by using a target neural network model to obtain a processing result of the to-be-processed image, where the target neural network model is obtained by updating at least two of a related parameter of a neural network model and a structure of the neural network model until an evaluation result of an updated neural network model meets a preset condition and/or a quantity of updates reaches a preset quantity of times — 1320

FIG. 13

Neural network model update apparatus 3000

Memory 3001

Processor 3002

Bus 3004

Communication interface 3003

FIG. 14

Image processing apparatus 4000

Memory 4001

Processor 4002

Bus 4004

Communication
interface 4003

FIG. 15

Neural network model training apparatus 5000

Memory 5001

Processor 5002

Bus 5004

Communication
interface 5003

FIG. 16

## INTERNATIONAL SEARCH REPORT

| | International application No. |
|---|---|
| | **PCT/CN2020/114832** |

**A. CLASSIFICATION OF SUBJECT MATTER**

G06N 3/02(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

WPI, EPODOC, CNPAT, CNKI: 神经网络, 模型, 更新, 参数, 超参数, 损失函数, 评估, 训练, 预测, 标签, 条件, 规则, 次数, neural, network, model, update, parameter, loss, function, evaluat+, assessment, training, predict, label, tag, rule

**C. DOCUMENTS CONSIDERED TO BE RELEVANT**

| Category* | Citation of document, with indication, where appropriate, of the relevant passages | Relevant to claim No. |
|---|---|---|
| A | CN 108805259 A (BEIJING DAJIA INTERCONNECTION INFORMATION TECHNOLOGY CO., LTD.) 13 November 2018 (2018-11-13) description, paragraphs 0073-0102 | 1-40 |
| A | CN 108171329 A (SOUTH CHINA NORMAL UNIVERSITY) 15 June 2018 (2018-06-15) entire document | 1-40 |
| A | CN 108830385 A (BEIJING JD FINANCE TECHNOLOGY HOLDING CO., LTD.) 16 November 2018 (2018-11-16) entire document | 1-40 |
| A | CN 110555517 A (CHINA UNIVERSITY OF PETROLEUM (EAST CHINA)) 10 December 2019 (2019-12-10) entire document | 1-40 |
| A | US 10068557 B1 (GOOGLE INC.) 04 September 2018 (2018-09-04) entire document | 1-40 |
| A | US 2019188569 A1 (NVIDIA CORPORATION) 20 June 2019 (2019-06-20) entire document | 1-40 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 November 2020** | **30 November 2020** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/114832**

| Patent document cited in search report | | | Publication date (day/month/year) | Patent family member(s) | | | Publication date (day/month/year) |
|---|---|---|---|---|---|---|---|
| CN | 108805259 | A | 13 November 2018 | None | | | |
| CN | 108171329 | A | 15 June 2018 | None | | | |
| CN | 108830385 | A | 16 November 2018 | None | | | |
| CN | 110555517 | A | 10 December 2019 | None | | | |
| US | 10068557 | B1 | 04 September 2018 | WO | 2019040132 | A1 | 28 February 2019 |
| US | 2019188569 | A1 | 20 June 2019 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911314332